(19) Europäisches Patentamt
European Patent Office
Office européen des brevets

(11) **EP 3 315 290 B1**

## (12) EUROPÄISCHE PATENTSCHRIFT

(45) Veröffentlichungstag und Bekanntmachung des Hinweises auf die Patenterteilung:
**26.02.2020   Patentblatt 2020/09**

(21) Anmeldenummer: **16196228.7**

(22) Anmeldetag: **28.10.2016**

(51) Int Cl.:
*B29C 65/08* (2006.01)      *B29C 65/20* (2006.01)
*C09J 5/02* (2006.01)       *C09J 5/06* (2006.01)
*C08J 5/12* (2006.01)       *B29C 65/04* (2006.01)
*B29C 65/06* (2006.01)      *B29C 65/10* (2006.01)
*B29C 65/14* (2006.01)      *B29C 65/16* (2006.01)
*B29C 65/18* (2006.01)      *B29C 65/72* (2006.01)

(54) **VERFAHREN ZUM SCHWEISSEN EINES POLYOLEFIN-KUNSTSTOFFES MIT EINEM WEITEREN KUNSTSTOFF**

METHOD OF WELDING A POLYOLEFIN PLASTIC WITH ANOTHER PLASTIC

PROCÉDÉ DE SOUDAGE D'UN PLASTIQUE À BASE DE POLYOLÉFINE AVEC UN AUTRE PLASTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.05.2018   Patentblatt 2018/18**

(73) Patentinhaber: **Henkel AG & Co. KGaA**
**40589 Düsseldorf (DE)**

(72) Erfinder:
• **LÜTZEN, Hendrik**
  **80637 München (DE)**
• **WALTER, Pablo**
  **80801 München (DE)**
• **HÄRTIG, Thomas**
  **80796 München (DE)**
• **KASPER, Dirk**
  **40597 Düsseldorf (DE)**
• **KLUG, Christian**
  **73441 Bopfingen (DE)**

(56) Entgegenhaltungen:
EP-A1- 0 876 436        DE-A1-102005 056 286
JP-B2- 3 541 064        US-A1- 2005 261 422
US-A1- 2013 160 937

• HUIXIA LIU ET AL: "Study on Welding Mechanism Based on Modification of Polypropylene for Improving the Laser Transmission Weldability to PA66", MATERIALS, Bd. 8, Nr. 8, 4. August 2015 (2015-08-04), Seiten 4961-4977, XP055262640, DOI: 10.3390/ma8084961

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

# EP 3 315 290 B1

**Beschreibung**

Die vorliegende Erfindung bezieht sich auf ein Verfahren zum Verschweißen von einem Polyolefin-Kunststoff mit einem Kunststoff unter Verwendung eines Primers, wobei der Primer mindestens ein Maleinsäureanhydrid enthaltendes Polymer und mindestens einen Polyester enthält. Darüber hinaus betrifft die vorliegende Erfindung entsprechend verschweißte Produkte.

US 2005/261422 A1 beschreibt die Verwendung eines Primers für ein thermoplatisches und/oder elastisches Substrat zur Verbesserung der Haftung. Dabei kann der Primer bei Reparaturen, Zusammenbau oder Beschichtungen eingesetzt werden. Neben dem Primer kann ebenfalls ein Klebstoff verwendet werden oder der Primer wird mit einem Anstrich überstrichen. Unter Verwendung des Primers soll die Haftung des thermoplatischen und/oder elastischen Substrats zu anderen Materialen wie Metal, Holz, Keramik, Leder und ähnlichem oder zu einem folgenden Anstrich verbessert werden. DE 10 2005 056286 A1 offenbart ein Verfahren zum Verschweißen von einem Polyolefin-Kunststoff mit einem zweiten Kunststoff unter Verwendung eines Primers, wobei der Primer ein Maleinsäureanhydrid enthaltendes Polymer enthählt.

Aus dem Stand der Technik sind verschiedene Verfahren bekannt, um zwei oder mehrere Substrate, die aus Kunststoffen, wie zum Beispiel aus Polyethylen (PE), Polyacrylate oder Polyamid (PA) bestehen, miteinander zu verbinden. Dabei gibt es sowohl mechanische Verbindungsmöglichkeiten, wie beispielsweise das Rasten oder Schrauben, oder Klebeverfahren. Alternativ dazu können Kunststoffe auch miteinander verschweißt werden. Beim Schweißen handelt sich um ein Fügeverfahren für eine nicht lösbare, stofflich physikalische Verbindung im Allgemeinen artgleicher Kunststoffe, wie zum Beispiel PE mit PE oder PA mit PA. Artgleiche thermoplastische Kunststoffe sind solche Polymere, die sich hinsichtlich ihrer Molekularstruktur, ihrer Schmelztemperatur, der Schmelzviskosität und ihres Wärmeausdehnungskoeffizienten nicht wesentlich unterscheiden und grundsätzlich bedingt miteinander mischbar sind. Meistens handelt sich es bei artgleichen Kunststoffen um Kunststoffe einer identischen Polymer-Basis bzw. um identische Kunststoffe.

Es sind verschiedenste Verfahren bekannt, um zwei oder mehrere artgleiche Kunststoffe miteinander zu verschweißen. Dabei können unterschiedlichste Schweißverfahren eingesetzt werden, wie beispielsweise Infrarot-Schweißen, Infrarot/Vibrationsschweißen oder Ultraschallschweißen. Diese Verfahren zum Verschweißen von gleichartigen Kunststoffen basieren darauf, dass die jeweiligen Kunststoffe im Bereich der Schweißzone aufgeschmolzen werden und dass sich die Stoffe in dieser Zone stoff- und kraftschlüssig miteinander verbinden.

Diese Schweißverfahren funktionieren immer so lange gut, solange artgleiche Kunststoffe miteinander verbunden werden sollen. Sobald allerdings zwei Kunststoffe miteinander verschweißt werden sollen, die artungleich bzw. unverträglich miteinander sind, wie zum Beispiel Kunststoffe aus Polypropylen und Polycarbonat, kann keine dauerhafte Verbindung mit hoher mechanischer Festigkeit zwischen den beiden Substraten hergestellt werden. In dem Fall des Versuches eines direkten Verschweißens mit dem aus dem Stand der Technik bekannten Schweißverfahren der beiden Kunststoffe Polypropylen und Polycarbonat oder der beiden Kunststoffe Polypropylen und ABS (Acrylnitril-Butandien-Styrol-Copolymer) oder der beiden Kunststoffe Polypropylen und PET (Polyethylenterephthalat) oder der beiden Kunststoffe Polypropylen und PBT (Polybutylenterephthalat) werden keine bis sehr geringe Festigkeiten erzielt.

Bisher konnten entsprechende unterschiedliche Kunststoffe lediglich durch eine mechanische Verbindung oder ein Klebeverfahren miteinander verbunden werden. Die Nachteile an einer mechanischen Verbindung sind die komplizierte Anbringung, die punktuelle Materialbelastung als auch die Notwendigkeit eines zusätzlichen mechanischen Verbindungsmittels. Des Weiteren können bei einer mechanischen Verbindung selten stoffschlüssige Verbindungen erreicht werden. Der Nachteil an einem Klebeverfahren ist jedoch, dass die Endfestigkeit der Verbindung erst nach einem langen Zeitraum, der bis zu mehreren Wochen betragen kann, erreicht wird. Des Weiteren erfordert das Verkleben von niederenergetischen Oberflächen meist eine aufwendige Vorbehandlung der Fügepartner. Zusätzlich ist eine Klebeverbindung häufig aufgrund der äußeren Witterung nicht unbegrenzt stabil. Außerdem ist die Bereitstellung einer sauberen Klebeverbindung häufig kompliziert und zeitaufwendig. Somit stellt die Verbindung mittels eines Schweißverfahrens für Kunststoffe die sauberste, schnellste und einfachste Lösung dar.

Die Aufgabe der vorliegenden Erfindung bestand somit darin, ein einfaches Verfahren zum Verschweißen von einem Polyolefin-Kunststoff mit einem zweiten Kunststoff zu finden. Dabei sollte die Verbindung zwischen diesen unterschiedlichen Kunststoffen durch die Schweißnaht möglichst stabil und von Dauer sein.

Überraschenderweise wurde gefunden, dass diese Aufgabe durch ein Verfahren zum Verschweißen von einem Polyolefin-Kunststoff mit einem zweiten Kunststoff unter Verwendung eines Primers gelöst wird, wobei der Primer mindestens ein Maleinsäureanhydrid enthaltendes Polymer, insbesondere mindestens ein Maleinsäureanhydrid gepfropftes Polyolefin-Polymer, und mindestens einen Polyester, insbesondere mindestens einen Copolyester, enthält.

Durch die Verwendung eines Primers, enthaltend mindestens ein Maleinsäureanhydrid enthaltendes Polymer, insbesondere mindestens ein Maleinsäureanhydrid gepfropftes Polyolefin-Polymer, und mindestens einen Polyester, bevorzugt mindestens einen Copolyester, konnten beim Verschweißen von einem Polyolefin-Kunststoff mit einem Kunststoff besonders stabile, stoffschlüssige Verbindungen zwischen den Kunststoffen erhalten werden.

Der erste Fügepartner zum Verschweißen unter Verwendung eines Primers ist ein Polyolefin-Kunststoff, insbesondere ein thermoplastischer Polyolefin-Kunststoff. Ein Polyolefin-Kunststoff basiert auf polyolefinischen Polymeren, wie Homo- und Copolymere von alpha-Olefinen. Die polyolefinischen Polymere können ausgewählt werden aus der Gruppe bestehend aus Poly-alpha-Olefin-Homopolymeren auf Basis von Ethylen, Propylen und/oder Butylen, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethylen oder Propen mit 1-Buten, 1-Hexen, 1-Octen, oder einer Kombination davon. Insbesondere sind die Polyolefin-Kunststoffe ausgewählt aus Polyethylen- (insbesondere high-density/HD-Polyethylen-, medium-density/MD-Polyethylen-, lowdensity/LD-Polyethylen-, ultra high molecular weight/UHMW-Polyethylen- und linear lowdensity/LLD-Polyethylen-, vorzugsweise HD-Polyethylen-, MD-Polyethylen- oder LD-Polyethylen-) und Polypropylen-Kunststoffen. Besonders bevorzugt ist der Polyolefin-Kunststoff ein Polyethylen-Kunststoff oder Polypropylen-Kunststoff, besonders bevorzugt ein Polypropylen-Kunststoff.

Vorzugsweise haben die Polyolefin-Polymere, insbesondere Polypropylen-Polymere, eine gewichtsmittlere Molmasse (Gewichtsmittel Mw) von größer 10000 g/mol, insbesondere größer 20000 g/mol, bevorzugt größer 50000 g/mol, besonders bevorzugt größer 100000 g/mol. Vorzugsweise weisen die Polyolefin-Polymere, insbesondere Polypropylen-Polymere eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte Polyethylen-Polymere weisen eine gewichtsmittlere Molmasse (Gewichtsmittel Mw) von 50000 g/mol bis 1000000 g/mol, insbesondere von 200000 g/mol bis 500000 g/mol auf. Andere bevorzugte Polyethylen-Polymere (UHMW-PE-Polymere) weisen eine gewichtsmittlere Molmasse von größer 2000000 g/mol, insbesondere von 4000000 - 6000000 g/mol auf. Besonders bevorzugte Polyolefin-Polymere, insbesondere Polypropylen-Polymere haben gewichtsmittlere Molmassen (Gewichtsmittel Mw) von 50000 g/mol bis 250000 g/mol.

Die Polyolefin-Kunststoffe, insbesondere Polypropylen-Kunststoffe können auch weitere Komponenten enthalten, z.B. Füllstoffe, wie Naturfasern oder Glasfasern, Pigmente, Farbstoffe, Rheologiehilfsmittel, Entformungshilfen oder Stabilisatoren. Bevorzugt besteht der Polyolefin-Kunststoff, insbesondere Polyethylen- und/oder Polypropylen-Kunststoff, bevorzugt Polypropylen-Kunststoff zu mehr als 80 Gew.-%, insbesondere zu mehr als 90 Gew.-%, bevorzugt zu mehr als 98 Gew.-% aus den genannten Polyolefin-Polymeren, insbesondere den genannten Polyethylen- und/oder Polypropylen-Polymeren, bevorzugt Polypropylen-Polymeren, jeweils bezogen auf den Polymeranteil des Polyolefin-Kunststoffes (Gesamt Polyolefin-Kunststoff ohne Füllstoffe). Vorzugsweise besteht der Polyolefin-Kunststoff, bevorzugt Polypropylen-Kunststoff zu mehr als 50 Gew.-%, insbesondere zu mehr als 70 Gew.-%, vorzugsweise zu mehr als 90 Gew.-%, bevorzugt zu mehr als 95 Gew.-%, besonders bevorzugt zu mehr als 98 Gew.-% aus dem genannten Polyolefin-Polymeren, insbesondere dem Polypropylen, jeweils bezogen auf den gesamten Polyolefin-Kunststoff (mit Füllstoffen). Ein weiterer bevorzugter Polyolefin-Kunststoff, insbesondere Polyethylen- und/oder Polypropylen-Kunststoff, bevorzugt Polypropylen-Kunststoff, besteht zu 10 bis 80 Gew.-%, insbesondere zu 30 bis 50 Gew.-% aus den genannten Polyolefin-Polymeren, insbesondere den genannten Polyethylen- und/oder Polypropylen-Polymeren, bevorzugt Polypropylen-Polymeren, jeweils bezogen auf gesamten Polyolefin-Kunststoff (mit Füllstoffen). Dies ist besonders bevorzugt für Polyolefin-Kunststoffe die mit Naturfasern gefüllt sind. Ein bevorzugter Polyolefin-Kunststoff, insbesondere Polyethylen- und/oder Polypropylen-Kunststoff, bevorzugt Polypropylen-Kunststoff enthält 20 bis 80 Gew.-%, insbesondere 50 bis 70 Gew.-% Fasern, insbesondere Naturfasern, bezogen auf den gesamten Polyolefin-Kunststoff (mit Füllstoffen).

Der zweite Fügepartner zum Verschweißen unter Verwendung eines Primers ist ein weiterer Kunststoff. Die zu fügenden Kunststoffe bzw. die Polymere, auf denen diese Kunststoffe basieren, können aus den folgenden genannten ausgewählt werden: Polyoxyalkylene, Polycarbonate (PC), Polyester wie Polybutylenterephthalat (PBT) oder Polyethylenterephthalat (PET), Polyolefine wie Polyethylen oder Polypropylen, Poly(meth)acrylate, Polyamide, vinylaromatische (Co)polymere wie Polystyrol, schlagzäh-modifiziertes Polystyrol wie HI-PS, oder SAN-, ASA-, ABS oder AES-Polymerisate, Polyarylenether wie Polyphenylenether (PPE), Polysulfone, Polyphenylensulfide (PPS), Polyurethane, Polylactide, halogenhaltige Polymerisate, wie Polyvinylchlorid (PVC), imidgruppenhaltige Polymere, Celluloseester, Siliconpolymere und thermoplastische Elastomere. Es können auch Mischungen unterschiedlicher Thermoplaste als Materialien für die Kunststoffformteile eingesetzt werden. Bei diesen Mischungen kann es sich um ein/oder mehrphasige Polymerblends handeln. Die miteinander zu verbindenden Formteile können aus identischen oder verschiedenen Thermoplasten bzw. Thermoplastblends bestehen, vorzugsweise weisen die Kunststoffe ein thermoplastisches Polymer als Hauptkomponente, vor allem zu mehr als 30 Gew.-%, insbesondere zu mehr als 60 Gew.-%, vorzugsweise zu mehr als 70 Gew.-%, bevorzugt zu mehr als 90 Gew.-%, besonders bevorzugt zu mehr als 95 Gew.-% aus diesem einen thermoplastischen Polymer, jeweils bezogen auf den Polymeranteil des Kunststoffes, insbesondere jeweils bezogen auf den gesamten Kunststoff (mit Füllstoffen).

Vorzugsweise wird der zweite Kunststoff ausgewählt aus Kunststoffen aus Polycarbonat (PC), Acrylnitril-Butadien-Styrol (ABS), Polymethylmethacrylat (PMMA), Polyethylenterephthalat (PET), Polybutylenterephthalat (PBT), Polystyrol (PS), Poly-Styrol-Acrylnitril (SAN), Poly-Acrylester-Styrol-Acrylnitril (ASA), Methylmethacrylat-Acrylnitril-Butadien-Styrol (MABS), High Impact Polystyrol (HIPS), Polyamid (PA) bzw. Mischungen daraus. Bei den Mischungen, auch Blends genannt, handelt es sich um Mischungen der genannten Kunststoffe bzw. der entsprechenden Polymere, soweit dies möglich ist. Ein Beispiel wäre ein ABS/PC-Kunststoff. In einer bevorzugten Ausführungsform ist der zweite Fügepartner aus einem Kunststoff, der sich vom Kunststoff des ersten Fügepartners in der Zusammensetzung und/oder Eigenschaften unterscheidet. Somit ist bevorzugt, dass der zweite Kunststoff sich vom ersten Polyolefin-Kunststoff unterscheidet. Insbesondere ist der zweite Kunststoff kein Polyethylen- oder Polypropylen-Kunststoff, bevorzugt kein Polyolefin-Kunststoff.

Geeignet als zweite zu fügende Kunststoffe sind zum Beispiel Polyamid-Kunststoffe. Bei dem Polyamid-Kunststoff handelt es sich vorzugsweise um ein thermoplastisches Polyamid. Zu den Thermoplasten auf Amid-Basis gehören beispielsweise Polyamid 6, ein Homopolymerisat aus epsilon-Caprolactam (Polycaprolactam); Polyamid 11, ein Polykondensat aus 11-Aminoundecansäure (Poly-11-aminoundecanamid); Polyamid 12, ein Homopolymerisat aus omega-Laurinlactam (Polylaurinlactam); Polyamid 6.6, ein Homopolykondensat aus Hexamethylendiamin und Adipinsäure (Polyhexamethylenadipamid); Polyamid 6.10, ein Homopolykondensat aus Hexamethylendiamin und Sebacinsäure (Polyhexamthylensebacamid); Polyamid 6.12 ein Homopolykondensat aus Hexamethylendiamin und Dodecandisäure (Polyhexamethylendodecanamid) oder Polyamid 6-3-T, ein Homopolykondensat aus Trimethylhexamethylendiamin und Terephthalsäure (Polytrimethylhexamthylenterephthalamid), Poly(p-phenylenterephthalamid) oder Poly(m-phenylenterephthalamid) aus Phenylendiamin und Terephthalsäure, Polyphthalamide PPA aus verschiedenen Diaminen und Terephthalsäure sowie Gemische davon.

Optisch transparente Polyamide umfassen mikrokristalline Polyamide enthaltend lineare aliphatische Dicarbonsäuren und cycloaliphatische Diamine, amorphe Polyamide enthaltend lineare aliphatische Dicarbonsäuren und cycloaliphatische Diamine und optional Lactame bzw. Aminocarbonsäuren, amorphe Polyamide enthaltend Terephthalsäure und cycloaliphatische oder verzweigte aliphatische Diamine und optional Lactame bzw. Aminocarbonsäuren oder amorphe Polyamide enthaltend Isophthalsäure und cycloaliphatische oder lineare oder verzweigte aliphatische Diamine und optional Lactame bzw. Aminocarbonsäuren. Geeignete optisch transparente Polyamide sind beispielsweise Amide aus Dodecandisäure und einem Isomerengemisch des 4,4'-Bis(aminocyclohexyl)-methans, aus Terephthalsäure und dem Isomerengemisch des 2,2,4- und 2,4,4-Trimethylhexamethylendiamins, aus Dodecandisäure und dem Isomerengemisch des 3,3'-Dimethyl-4,4'-bis(aminocyclohexyl)-methans, aus Laurinlactam, Isophthalsäure und dem Isomerengemisch des 3,3'-Dimethyl- 4,4'-bis(aminocyclohexyl)-methans oder aus Tetradecandisäure und dem Isomerengemisch des 3,3'-Dimethyl- 4,4'-bis(aminocyclohexyl)-methans oder aus epsilon-Caprolactam oder omega-Laurinlactam.

Bevorzugte Polyamide werden ausgewählt aus der Gruppe bestehend aus Polyamid 6, Polyamid 6.6, Polyamid 6.10, Polyamid 6.12, Polyamid 10.10, Polyamid 11, Polyamid 12, Polyamid 10.12, Polyphthalamiden, optischen transparenten Polyamiden oder Mischungen auf Basis dieser Polyamide. Besonders bevorzugte Polyamide sind ausgewählt aus Polyamid 6, Polyamid 6.6, Polyamid 12, Polyphthalamiden, optisch transparenten Polyamiden sowie deren Mischungen, insbesondere Polyamid 6, Polyamid 6.6 sowie deren Mischungen.

Geeignet zur Herstellung der Kunststoffe sind auch Polyoxyalkylenhomo- oder -copolymerisate, insbesondere (Co)polyoxymethylene (POM). Ganz allgemein weisen diese Polymere mindestens 50 Mol-% an wiederkehrenden Einheiten -CH2O in der Polymerhauptkette auf. Die Homopolymeren werden im Allgemeinen durch Polymerisation von Formaldehyd oder Trioxan hergestellt, vorzugsweise in Gegenwart von geeigneten Katalysatoren. Bevorzugt sind Polyoxymethylencopolymere und Polyoxymethylenterpolymerisate. Die bevorzugten Polyoxymethylen(co)polymere haben Schmelzpunkte von mindestens 150 °C und gewichtsmittlere Molemassen (Gewichtsmittel Mw) im Bereich von 5000 bis 200000 g/mol, vorzugsweise von 7000 bis 150000 g/mol. Endgruppenstabilisierte Polyoxymethylenpolymerisate, die an den Kettenenden C-C Bindungen aufweisen, werden besonders bevorzugt. In einer weiteren Ausführungsform sind insbesondere Hydroxylgruppen-terminierte Polyoxymethylenpolymerisate bevorzugt.

Unter Polyarylenethern sind bevorzugt sowohl Polyarylenether an sich, Polyarylenethersulfide, Polyarylenethersulfone oder Polyarylenetherketone zu verstehen. Deren Arylengruppen können gleich oder verschieden sein und unabhängig voneinander einen aromatischen Rest mit 6 bis 18 C-Atomen bedeuten. Beispiele geeigneter Arylenreste sind Phenylen, Biphenylen, Terphenylen, 1,5-Naphthylen, 1,6-Naphthylen, 1,5-Anthrylen, 9,10-Anthrylen oder 2,6-Anthrylen. Hiervon werden 1,4-Phenylen und 4,4'-Biphenylen bevorzugt. Vorzugsweise sind diese aromatischen Reste nicht substituiert. Sie können jedoch einen oder mehrere Substituenten tragen.

Vorzugsweise kann der zweite Kunststoff ein Polyester-Kunststoff sein. Geeignete Polyester-Kunststoffe sind ebenfalls an sich bekannt und in der Literatur beschrieben. Bevorzugte Polyester-Kunststoffe umfassen einen Polyester mit einem aromatischen Ring in der Hauptkette, der von einer aromatischen Dicarbonsäure herrührt. Der aromatische Ring kann auch substituiert sein, z. B. durch Halogen wie Chlor oder Brom oder durch C1-C4-Alkylgruppen wie Methyl-, Ethyl-, i- bzw. n-Propylgruppen oder n-, i- bzw. t-Butylgruppen. Die Polyester können durch Umsetzung von aromatischen Dicarbonsäuren, deren Estern oder anderer esterbildender Derivate hiervon mit aliphatischen Dihydroxyverbindungen in an sich bekannter Weise hergestellt werden. Als bevorzugte Dicarbonsäuren sind Naphthalindicarbonsäure, ortho-Phthalsäure, Terephthalsäure und Isophthalsäure oder deren Mischungen zu nennen. Bis zu 30 Mol-% der aromatischen Dicarbonsäuren können durch aliphatische oder cycloaliphatische Dicarbonsäuren wie Adipinsäure, Azelainsäure, Sebacinsäure, Dodecandisäure und Cyclohexandicarbonsäure ersetzt werden. Von den aliphatischen Dihydroxyverbindungen werden Diole mit 2 bis 8 Kohlenstoffatomen, insbesondere 1,2-Ethandiol, 1,4-Butandiol, 1,6-Hexandiol, 1,4-Hexandiol, 1,4-Cyclohexandimethylol und Neopentylglykol oder deren Mischungen bevorzugt. Als besonders bevorzugte Polyester sind Polyalkylenterephthalate, die sich von Alkandiolen mit 2 bis 6 C-Atomen ableiten, zu nennen.

Die Polyester-Kunststoffe werden vorzugsweise ausgewählt aus der Gruppe aus Polyethylenterephthalat (PET)-, Polyethylennaphthalat-, Polybutylennaphthalat- und Polybutylenterephthalat (PBT)-Kunststoffen sowie Mischungen dieser, insbesondere Polyethylenterephthalat (PET)- und Polybutylenterephthalat (PBT)-Kunststoffen sowie Mischungen dieser.

Die Polyester-Kunststoffe, insbesondere die Polyethylenterephthalat (PET)- und Polybutylenterephthalat (PBT)-Kunststoffe, können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polyester-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polyestern, jeweils bezogen auf den gesamten Polyester-Kunststoff (mit Füllstoffen). Vorzugsweise besteht der Polyester-Kunststoff zu mehr als 90 Gew.-%, insbesondere zu mehr als 95 Gew.-%, bevorzugt zu mehr als 98 Gew.-% aus den genannten Polyestern, jeweils bezogen auf den Polymeranteil des Polyester-Kunststoffes (Gesamt Kunststoff ohne Füllstoffe). Bevorzugt weisen die Polyester-Kunststoffe einen Gehalt an den genannten Polyestern, insbesondere an Polyethylenterephthalat und/oder Polybutylenterephthalat, von 50 - 100 Gew.-%, insbesondere 90 - 100 Gew.-% auf, jeweils bezogen auf den gesamten Polyester-Kunststoff (mit Füllstoffen).

In einer bevorzugten Ausführungsform ist der zweite Kunststoff ein Polycarbonat-Kunststoff. Polycarbonat-Kunststoffe sind vorzugsweise thermoplastische Kunststoffe, die sich formal als Polyester der Kohlensäure beschreiben lassen. Die Herstellung von Polycarbonaten kann prinzipiell durch Polykondensation von Phosgen mit Diolen, bevorzugt Bisphenolen, erfolgen. Bevorzugte Polycarbonate sind aromatische Polycarbonate. Aromatische Polycarbonate sind solche, die mindestens aus einem aromatischen Monomer aufgebaut werden. Bevorzugte Polycarbonat-Kunststoffe sind Bisphenol, insbesondere Bisphenol A und Bisphenol F basierte Polycarbonat-Kunststoffe. Bei den Bisphenol basierten Polycarbonaten besteht bevorzugt die Diol-Komponente zu 50 Gew.-%, insbesondere zu 70 Gew.-%, vorzugsweise zu 90 Gew.-%, bevorzugt zu 100 Gew.-% aus Bisphenol, insbesondere Bisphenol A und/oder Bisphenol F.

Die Polycarbonat-Kunststoffe können auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der Polycarbonat-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten Polycarbonaten, jeweils bezogen auf den gesamten Polycarbonat-Kunststoff (mit Füllstoffen). Vorzugsweise besteht der Polycarbonat-Kunststoff zu mehr als 90 Gew.-%, insbesondere zu mehr als 95 Gew.-%, bevorzugt zu mehr als 98 Gew.-% aus den genannten Polycarbonaten, jeweils bezogen auf den Polymeranteil des Polycarbonat-Kunststoffes (Gesamt Kunststoff ohne Füllstoffe). Bevorzugt weisen die Polycarbonat-Kunststoffe einen Gehalt an den genannten Polycarbonaten von 50 - 100 Gew.-%, insbesondere 90 - 100 Gew.-% auf, jeweils bezogen auf den gesamten Polycarbonat-Kunststoff (mit Füllstoffen).

In einer anderen bevorzugten Ausführungsform enthält der zweite Kunststoff mindestens ein vinylaromatisches Polymer, insbesondere Copolymer, aus Monomeren ausgewählt aus Styrol, Chlorstyrol, alpha-Methylstyrol und para-Methylstyrol. In untergeordneten Anteilen können die vinylaromatischen Copolymere (vorzugsweise nicht mehr als 20 Gew.-%, insbesondere nicht mehr als 8 Gew.-%) auch Comonomere wie (Meth)acrylnitril oder (Meth)acrylsäureester, wie (Methyl)methacrylat, am Aufbau beteiligt sein. Besonders bevorzugte vinylaromatische Polymere sind Polystyrol, Styrol-Acrylnitril-Copolymere (SAN), Polystyrolmethylmethacrylat (SMMA) und schlagzäh modifiziertes Polystyrol (HIPS = High Impact Polystyrene). Es versteht sich, dass auch Mischungen dieser Polymere eingesetzt werden können.

Ganz besonders bevorzugte vinylaromatische Polymere sind MABS-, SAN, ASA-, ABS- und AES-Polymerisate (MABS = (Methyl)methacrylat-Acrylnitril-Butadien-Styrol, SAN = Styrol-Acrylnitril, ASA = Acrylnitril-Styrol-Acrylester, ABS = Acrylnitril-Butadien-Styrol, AES = Acrylnitril-EPDM-Kautschuk-Styrol). Diese schlagzähen vinylaromatischen Polymere enthalten mindestens ein kautschukelastisches Pfropfpolymerisat und ein thermoplastisches Polymerisat (Matrixpolymerisat). Als Matrixmaterial wird im Allgemeinen auf ein Styrol/Acrylnitril-Polymerisat (SAN) zurückgegriffen. Bevorzugt werden Pfropfpolymerisate verwendet, die als Kautschuk einen Dienkautschuk auf Basis von Dienen wie z. B. Butadien oder Isopren (ABS), einen Alkylacrylatkautschuk auf Basis von Alkylestern der Acrylsäure wie n-Butylacrylat und 2-Ethylhexylacrylat, einen EPDM-Kautschuk auf Basis von Ethylen, Propylen und einem Dien oder Mischungen dieser Kautschuke bzw. Kautschukmonomere enthalten.

Das gewichtsmittlere Molekulargewicht dieser vinylaromatischen Polymere ist insbesondere von 1500 bis 2000000 g/mol, vorzugsweise von 70000 bis 1000000 g/mol.

In einer bevorzugten Ausführungsform wird der zweite Kunststoff ausgewählt aus SMMA-, SAN-, ASA-, ABS- und AES-Kunststoffen, insbesondere ABS-Kunststoffen.

Der zweite Kunststoff enthaltend vinylaromatische Polymere, bevorzugt der SMMA-, SAN-, ASA-, ABS- und AES-Kunststoff, kann auch weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der zweite Kunststoff, insbesondere der SAN-, ASA-, ABS- und AES-Kunststoff zu mehr als 40 Gew.-%, insbesondere zu mehr als 60 Gew.-%, vorzugsweise zu mehr als 70 Gew.-%, bevorzugt zu mehr als 90 Gew.-% aus den genannten vinylaromatischen Polymeren, jeweils bezogen auf den gesamten Kunststoff (mit Füllstoffen). Vorzugsweise besteht der zweite Kunststoff zu mehr als 90 Gew.-%, insbesondere zu mehr als 95 Gew.-%, bevorzugt zu mehr als 98 Gew.-% aus den genannten vinylaromatischen Polymeren, insbesondere SAN-, ASA-, ABS- und/oder AES-Polymeren, jeweils bezogen auf den Polymeranteil des Kunststoffes (Gesamt Kunststoff ohne Füllstoffe). Bevorzugt weist der zweite Kunststoff einen Gehalt an vinylaromatischen Polymeren von 60 - 100 Gew.-%, insbesondere 80 - 100 Gew.-% auf, jeweils bezogen auf den gesamten Kunststoff (mit Füllstoffen).

In einer anderen bevorzugten Ausführungsform enthält der zweite Kunststoff eine Mischung aus mindestens einem Polycarbonat und mindestens einem vinylaromatischen Polymer, bevorzugt den oben erwähnten. Vorzugsweise enthält diese Mischung mehr von einem Polycarbonat als von den vinylaromatischen Polymeren, insbesondere SMMA, SAN, ASA, ABS und/oder AES, vorzugsweise ABS. Bevorzugt ist das Verhältnis vom Polycarbonat, insbesondere vom aromatischen Polycarbonat, zum vinylaromatischen Polymer, insbesondere SMMA, SAN, ASA, ABS und/oder AES, vorzugsweise ABS, 1:1 bis 100:1, insbesondere 2:1 bis 50:1, vorzugsweise 3:1 bis 10:1, jeweils bezogen auf die Gewichtsteile.

Der zweite Kunststoff enthaltend eine Mischung aus mindestens einem Polycarbonat und mindestens einem vinylaromatischen Polymer kann ebenfalls weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der zweite Kunststoff zu mehr als 40 Gew.-%, insbesondere zu mehr als 60 Gew.-%, vorzugsweise zu mehr als 70 Gew.-%, bevorzugt zu mehr als 90 Gew.-% aus der genannten Mischung aus mindestens einem Polycarbonat und mindestens einem vinylaromatischen Polymer, jeweils bezogen auf den gesamten Kunststoff (mit Füllstoffen). Vorzugsweise besteht der zweite Kunststoff zu mehr als 90 Gew.-%, insbesondere zu mehr als 95 Gew.-%, bevorzugt zu mehr als 98 Gew.-% aus der genannten Mischung aus mindestens einem Polycarbonat und mindestens einem vinylaromatischen Polymer, jeweils bezogen auf den Polymeranteil des Kunststoffes (Gesamt Kunststoff ohne Füllstoffe). Bevorzugt weist der zweite Kunststoff einen Polymergehalt aus der Mischung aus mindestens einem Polycarbonat und mindestens einem vinylaromatischen Polymer von 50 - 90 Gew.-%, insbesondere 60 - 80 Gew.-% auf, jeweils bezogen auf den gesamten Kunststoff (mit Füllstoffen).

In einer anderen bevorzugten Ausführungsform enthält der zweite Kunststoff eine Mischung aus mindestens einem Polycarbonat und mindestens einem Polyester, bevorzugt den oben erwähnten Polyester-Kunststoffen. Bevorzugt ist das Verhältnis vom Polycarbonat, insbesondere vom aromatischen Polycarbonat, zum Polyester, insbesondere PET und/oder PBT, 50:1 bis 1:50, insbesondere 20:1 bis 1:20, vorzugsweise 9:1 bis 1:9, bevorzugt 5:1 bis 1:5, jeweils bezogen auf die Gewichtsteile. Vorzugsweise enthält eine endsprechende Mischung mehr von einem Polycarbonat als von einem Polyester, insbesondere PET und/oder PBT.

Der zweite Kunststoff enthaltend eine Mischung aus mindestens einem Polycarbonat und mindestens einem Polyester kann ebenfalls weitere Komponenten enthalten, z.B. Füllstoffe, wie Glasfasern, Pigmente, mineralische Partikel, Farbstoffe, Rheologiehilfsmittel, Entformungshilfen oder Stabilisatoren. Vorzugsweise besteht der zweite Kunststoff zu mehr als 40 Gew.-%, insbesondere zu mehr als 60 Gew.-%, vorzugsweise zu mehr als 70 Gew.-%, bevorzugt zu mehr als 90 Gew.-% aus der genannten Mischung aus mindestens einem Polycarbonat und mindestens einem Polyester, jeweils bezogen auf den gesamten Kunststoff (mit Füllstoffen). Vorzugsweise besteht der zweite Kunststoff zu mehr als 90 Gew.-%, insbesondere zu mehr als 95 Gew.-%, bevorzugt zu mehr als 98 Gew.-% aus der genannten Mischung aus mindestens einem Polycarbonat und mindestens einem Polyester, jeweils bezogen auf den Polymeranteil des Kunststoffes (Gesamt Kunststoff ohne Füllstoffe). Bevorzugt weist der zweite Kunststoff einen Polymergehalt aus der Mischung aus mindestens einem Polycarbonat und mindestens einem Polyester von 50 - 90 Gew.-%, insbesondere 60 - 80 Gew.-% auf, jeweils bezogen auf den gesamten Kunststoff (mit Füllstoffen).

In einer weiteren bevorzugten Ausführungsform enthält der zweite Kunststoff mindestens ein Poly(meth)acrylat. Poly(meth)acrylat ist ein synthetischer, bevorzugt transparenter, thermoplastischer Kunststoff. Bevorzugte Poly(meth)acrylate sind aus 50 bis 100 Gew.-%, insbesondere 70 bis 100 Gew.-% Acrylat und/oder Methacrylat aufgebaut, wobei die (Meth)acrylat-Einheiten vorzugsweise mit einem C1 bis C12 Alkylrest, insbesondere C1-C4, bevorzugt Methylrest verestert sind. Die Schreibweise Poly(meth)acrylat gibt an, dass das Polymer aus Acrylat und/oder Methacrylat aufgebaut ist. Bzw. die Schreibweise (Meth)acrylat gibt an, dass es sich sowohl um ein Acrylat als auch um ein Methacrylat handeln kann. Insbesondere bevorzugt ist das Poly(meth)acrylat ein Polymethylmethacrylat (PMMA, umgangssprachlich auch Acrylglas oder Plexiglas). Bevorzugte Polymethylmethacrylate sind aus 50 bis 100 Gew.-%, insbesondere 70 bis 100 Gew.-% Methylmethacrylat aufgebaut.

Als Comonomere für den Aufbau des Poly(meth)acrylats, insbesondere des Polymethylmethacrylats kommen in erster Linie (Meth)acrylsäure, insbesondere Acrylsäure, und deren Alkylester mit 1 bis 12 Kohlenstoffatomen, insbesondere 1 bis 4 Kohlenstoffatomen im Alkylrest, sowie Acryl- und/oder Methacrylnitril, Acryl- und/oder Methacrylamid, Styrol und/oder Maleinsäureanhydrid in Betracht. Bevorzugt sind thermoplastisch und thermoelastisch verformbare Kunststoffe. Bevorzugte thermoplastische Polymethylmethacrylat-Kunststoffe haben gewichtsmittlere Molmassen (Gewichtsmittel Mw) von größer 50000 g/mol, insbesondere größer 100000 g/mol. Vorzugsweise weisen die thermoplastischen Poly(meth)acrylat-, insbesondere Polymethylmethacrylat-Kunststoffe eine gewichtsmittlere Molmasse (Gewichtsmittel Mw) von kleiner 2000000 g/mol, insbesondere kleiner 1000000 g/mol, bevorzugt kleiner 500000 g/mol auf. Besonders bevorzugte thermoplastische Poly(meth)acrylat-, insbesondere Polymethylmethacrylat-Kunststoffe haben gewichtsmittlere Molmassen (Gewichtsmittel Mw) von 50000 g/mol bis 250000 g/mol, z. B. ca. 100000 g/mol bis ca. 180000 g/mol für den Spritzguss.

Ein weiterer wesentlicher Bestandteil der Erfindung ist die Verwendung mindestens eines Primers, vorzugsweise genau eines Primers. Der Primer enthält mindestens ein Maleinsäureanhydrid enthaltendes Polymer, insbesondere ein Maleinsäureanhydrid gepfropftes Polyolefin-Polymer, und mindestens einen Polyester, insbesondere mindestens einen Copolyester.

Der Primer stellt ein Schweißhilfsmittel dar, welches vorzugsweise als eine Vorbehandlungsschicht auf mindestens einem der zu verschweißenden Oberflächen der Substrate im Bereich der Fügezone aufgetragen wird. Der Primer ist nicht als Klebstoff, Reinigungsmittel oder ähnliches zu verstehen, vielmehr ist der Primer ein Hilfsmittel zum Schweißen, wodurch die Fügepartner in der Fügezone (bzw. Schweißzone) kompatibel zueinander gemacht werden und so in der Fügezone beim Fügen eine stoff- und kraftschlüssige Verbindung zwischen den zu verschweißenden Substraten entsteht.

Die Versuche haben gezeigt, dass durch die Verwendung eines entsprechenden Primers, enthaltend die erfindungsgemäßen Polymere, die zu fügenden Kunststoffe beim Schweißen in der Fügenaht kompatibilisiert werden konnten und somit eine stabile und dauerhafte Verbindung erzielt werden kann. Ohne die Verwendung eines entsprechenden Primers konnten keine oder nur sehr geringe Festigkeiten der geschweißten Verbindung erzielt werden. Vorzugsweise weisen die gefügten Substrate eine Zugfestigkeit von mehr als 2 MPa, insbesondere mehr als 5 MPa, bevorzugt mehr als 7 MPa auf. Zugfestigkeit wird mittels einer Zuggeschwindigkeit von 5 mm/min gemäß der in den Versuchen beschriebenen Versuchsdurchführung bestimmt.

In einer bevorzugten Ausführungsform handelt es sich bei dem mindestens einen Maleinsäureanhydrid enthaltenden Polymer um Polymere, insbesondere Copolymere, welche in ihrem Gerüst Maleinsäureanhydrid-Gruppen einreagiert bzw. einpolymerisiert enthalten. Dabei kann in das Polymer ein Maleinsäureanhydrid bzw. Maleinsäureanhydrid-Derivat, insbesondere Maleinsäureanhydrid einreagiert bzw. einpolymerisiert sein. Ein Beispiel für ein Maleinsäureanhydrid-Derivat ist 1,2,3,6-Tetrahydrophthalsäureanhydrid, welches die relevante 5-gliedige Anhydrid-Gruppe umfasst. Dabei können die Polymere die Maleinsäureanhydrid-Gruppen sowohl im Backbone einpolymerisiert enthalten, wie zum Beispiel in einem Copolymer aus mindestens einem Maleinsäureanhydrid-Monomer und Acrylat- und/oder alpha-Olefin-Monomeren, als auch aufgepfropft enthalten, wie bei Maleinsäureanhydrid gepfropften Polyolefinen. In einer bevorzugten Form ist das Polymer im Primer ein Maleinsäureanhydrid gepfropftes Polyolefin, insbesondere ein Maleinsäureanhydrid gepfropftes Polyethylen und/oder Maleinsäureanhydrid gepfropftes Polypropylen, bevorzugt ein Maleinsäureanhydrid gepfropftes Polypropylen.

In einer anderen besonders bevorzugten Ausführungsform enthält der Primer vorzugsweise ein Copolymer, welches neben dem Maleinsäureanhydrid bzw. Maleinsäureanhydrid-Derivat ein oder mehrere Monomere ausgewählt aus der Gruppe von Acrylaten und Methacrylaten (zusammen (Meth)acrylate), insbesondere (Meth)acrylate mit einem Alkylrest mit 1 bis 12 Kohlenstoffatomen, vorzugsweise 1 bis 4 Kohlenstoffatomen, vorzugsweise Ethyl- und Butyl(meth)acrylat, (Meth)acrylsäure und alpha-Olefinen, insbesondere Ethylen, Propen, 1-Buten, 1-Hexen und 1-Octen, bevorzugt Ethylen einpolymerisiert enthält. Des Weiteren können auch funktionale Monomere mit Funktionalitäten wie beispielsweise Epoxid- oder Isocyanatgruppen, Carboxyl- oder Aminogruppen, aber auch Alkoxysilangruppen, eingesetzt werden. Besonders bevorzugt enthält das mindestens eine Copolymer einpolymerisiert zumindest ein Maleinsäureanhydrid(-Derivat), ein (Meth)acrylat und ein alpha-Olefin, vorzugsweise ein Maleinsäureanhydrid, ein (Meth)acrylat mit einem C1 bis C4 Alkylrest und ein Ethylen oder Propylen.

Die Maleinsäureanhydrid-Guppen enthaltenden Polymere können in bekannter Weise aus den Monomeren synthetisiert werden. Zusätzlich können diese Polymere in einer Polymer-analogen Reaktion gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole verestert werden. Vorzugsweise reagieren bzw. verestern die Maleinsäureanhydrid-Gruppen nur partiell, insbesondere weniger als 70 % der Maleinsäureanhydrid-Gruppen. Besonders bevorzugt ist es, wenn die Maleinsäureanhydrid-Gruppen nicht umgesetzt sind und weiterhin als Anhydrid Gruppen vorliegen. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

In einer bevorzugten Ausführungsform ist das mindestens eine Maleinsäureanhydrid enthaltende Polymer ein Maleinsäureanhydrid enthaltendes polyolefinisches Polymer, wie ein Homo- und Copolymer von alpha-Olefinen, insbesondere ein Maleinsäureanhydrid gepfropftes polyolefinisches Polymer. Die bevorzugten polyolefinischen Polymere können ausgewählt werden aus der Gruppe bestehend aus Poly-alpha-Olefin-Homopolymeren auf Basis von Ethen, Propen und/oder Buten, insbesondere Homopolymere aus Ethylen oder Propylen, und Poly-alpha-Olefin-Copolymere auf Basis von Ethen, Propen, 1-Buten, 1-Hexen und 1-Octen, insbesondere Ethylen/alpha-Olefin- und Propylen/alpha-Olefin-Copolymere, vorzugsweise Copolymere von Ethen oder Propen mit 1-Buten, 1-Hexen, 1-Octen, oder einer Kombination davon.

Die polyolefinischen Polymere können zudem auch halogeniert, insbesondere chloriert sein. In diesem Rahmen sind chlorierte Polyethylen- und/oder chlorierte Polypropylen-Polymere, insbesondere chlorierte Polypropylen-Polymere bevorzugt. Die chlorierten Polyolefine, insbesondere die chlorierten Polyethylen- und/oder chlorierten Polypropylen-Polymere weisen vorzugsweise einen Chlorgehalt von größer 5 Gew.-%, insbesondere größer 10 Gew.-%, bevorzugt größer 15 Gew.-% auf. Bevorzugt haben die chlorierten Polyolefine, insbesondere die chlorierten Polyethylen- und/oder chlorierten Polypropylen-Polymere einen Chlorgehalt von 5 bis 42 Gew.-%, insbesondere von 10 bis 40 Gew.-%, bevorzugt von 20 bis 35 Gew.-%. Bevorzugt sind die polyolefinischen Polymere nicht chloriert, insbesondere nicht halogeniert.

Die Maleinsäureanhydrid enthaltenden polyolefinischen Polymere können in bekannter Weise synthetisiert werden. Dabei könnten die Polyolefin-Polymere auch geringe Mengen an nicht alpha-Olefin-Monomeren, wie Styrol oder Acrylaten, enthalten. Vorzugsweise sind die Polyolefin-Polymere keine Blockcopolymere. Insbesondere enthalten die Polyolefine weniger als 10 Gew.-%, vorzugsweise weniger als 2 Gew.-%, bevorzugt weniger als 1 Gew.-%, besonders bevorzugt keine Monomere ausgewählt aus Styrol und Acrylaten, insbesondere nicht alpha-Olefin-Monomere. Zusätzlich könnten die Polymere auch in einer Polymer-analogen Reaktion weiter gepfropft sein. Besonders bevorzugte Reaktionspartner zum Pfropfen sind Alkohole, Thiole, Amine, Isocyanate, Anhydride, Carbonsäuren, insbesondere Alkohole, bevorzugt Alkohole mit 1 bis 6 Kohlenstoffatomen, wie Methanol und Isobutanol. Zum Pfropfen können die Maleinsäureanhydrid-Monomere bzw. Maleinsäureanhydrid-Einheiten im Polymer mit dem Reaktionspartner reagieren, insbesondere durch Alkohole oder durch Amine. Insbesondere können die Polymere auch weiter mit Maleinsäureanhydrid gepfropft werden, um den Maleinsäureanhydrid-Gehalt weiter zu erhöhen. Insbesondere bei Mischungen von Polyolefinen, insbesondere von Polyethylen und Polypropylen, können diese weiter gepfropft werden, insbesondere mit Aminen, vorzugsweise Diaminen, um diese miteinander zu verbinden. Vorzugsweise reagieren die Maleinsäureanhydrid-Gruppen nur partiell, insbesondere weniger als 90 Mol-%, bevorzugt weniger als 70 Mol-% der Maleinsäureanhydrid-Gruppen. Vorzugsweise werden die Maleinsäureanhydrid Gruppen partiell mit Aminen, insbesondere aliphatischen Aminen, bevorzugt aliphatischen Diaminen, wie Hexamethylendiamin umgesetzt. Bevorzugt werden 5-100 Mol-%, insbesondere 10-80 Mol-%, bevorzugt 20-70 Mol-% der Maleinsäureanhydrid-Gruppen des erfindungsgemäßen Polymeres, insbesondere der Maleinsäureanhydrid-Gruppen einer Mischung von Maleinsäureanhydrid gepfropften Polyolefin-Polymeren mit Aminen umgesetzt.

In einer anderen bevorzugten Ausführungsform werden die Maleinsäureanhydrid-Gruppen nicht umgesetzt und liegen weiterhin als Anhydrid Gruppen vor. In der bevorzugten Ausführung können die Maleinsäureanhydrid-Gruppen auch teilweise hydrolysiert vorliegen. Eine komplette Umsetzung der Maleinsäureanhydrid-Gruppen kann zu einer Verminderung der Festigkeit der resultierenden Schweißverbindung führen.

Besonders vorteilhaft sind Polymere, die einen Maleinsäureanhydrid-Gehalt von größer gleich 0,001 Gew.-%, insbesondere größer gleich 0,01 Gew.-%, bevorzugt größer gleich 0,02 Gew.-%, besonders bevorzugt größer gleich 0,05 Gew.-% bezogen auf das Polyolefin-Polymer enthalten. In vorteilhafter Weise enthalten die Polymere einen Maleinsäureanhydrid-Gehalt von 0,01 - 15 Gew.-%, insbesondere 0,02 - 10 Gew.-%, bevorzugt 0,05 - 5 Gew.-% bezogen auf das Polyolefin-Polymer. In einer anderen bevorzugten Ausführungsform enthalten die Polymere einen Maleinsäureanhydrid-Gehalt von 2 - 15 Gew.-%, insbesondere 5 - 10 Gew.-%, bezogen auf das Polyolefin-Polymer. Polylolefin-Polymere mit einem entsprechenden Maleinsäureanhydrid-Gehalt weisen besonders gute Festigkeiten der geschweißten Verbindung auf.

Vorteilhafterweise haben die Maleinsäureanhydrid enthaltenden Polymere, insbesondere Maleinsäureanhydrid gepfropften Polyolefin-Polymere ein gewichtsmittleres Molekulargewicht Mw von größer gleich 5000 g/mol, insbesondere größer gleich 50000 g/mol, bevorzugt größer gleich 100000 g/mol. Bevorzugt haben die Polymere ein gewichtsmittleres Molekulargewicht Mw im Bereich von 5000 - 2000000 g/mol, insbesondere von 50000 - 1000000 g/mol, bevorzugt von 100000 - 500000 g/mol. Polymere mit einem entsprechenden gewichtsmittleren Molekulargewicht wirken sich positiv auf die Sprödigkeit und Festigkeit der erhaltenen Verbindung aus. Das gewichtsmittlere Molekulargewicht kann mittels GPC gegen einen Polystyrol-Standard bestimmt werden.

In einer besonders bevorzugten Ausführungsform enthält der Primer ein Maleinsäureanhydrid gepfropftes Polyolefin-Polymer, wobei das Polyolefin-Polymer entsprechend dem Polyolefin-Kunststoff des ersten Fügepartners ausgewählt wird. Das bedeutet, wenn als erster Fügepartner ein Polypropylen-Kunststoff gewählt wird, enthält der Primer vorzugsweise ein Maleinsäureanhydrid gepfropftes Polypropylen. Besonders bevorzugt enthält der Primer mindestens ein Maleinsäureanhydrid gepfropftes Polypropylen, wenn ein Polypropylen-Kunststoff verschweißt wird, oder ein Maleinsäureanhydrid gepfropftes Polyethylen, wenn ein Polyethylen-Kunststoff verschweißt wird. Insbesondere bevorzugt ist die Kombination eines Maleinsäureanhydrid gepfropften Polypropylens im Primer mit einem Polypropylen-Kunststoff als ersten Fügepartner.

Zusätzlich zum Maleinsäureanhydrid enthaltenden Polymer enthält der Primer einen Polyester, vorzugsweise einen Copolyester. Polyester werden durch Umsetzung von Dicarbonsäuren, Dicarbonsäurechloriden und/oder Anhydriden mit entsprechenden polyfunktionellen Alkoholen, insbesondere bifunktionellen Alkoholen, erhalten. Dabei kann es sich um Umsetzungsprodukte aus aliphatischen, cycloaliphatischen oder aromatischen Dicarbonsäuren oder deren Anhydriden mit aliphatischen, cyclischen oder aromatischen Polyolen handeln. Werden mindestens zwei verschiedene Carbonsäuren und/oder Alkohole eingesetzt, handelt es sich um Copolyester. Durch Auswahl der Carbonsäuren und der Polyole können amorphe, teilkristalline oder kristalline Polyester und Copolyester erhalten werden. Üblicherweise werden Dicarbonsäuren und Diole miteinander zur Reaktion gebracht. Es ist jedoch auch möglich, dass anteilsweise geringe Mengen an Tricarbonsäuren oder Triolen eingesetzt werden. Die entstehenden Polyester sind vorzugsweise nicht vernetzt und bevorzugt aufschmelzbar. Bevorzugt werden lineare Polyester eingesetzt. Das gewichtsmittlere Molekulargewicht geeigneter Polyester soll bevorzugt zwischen 1500 bis 100000 g/mol betragen, insbesondere zwischen 5000 bis 75000 g/mol, bevorzugt zwischen 15000 bis 50000 g/mol. (bestimmt mittels GPC gegen einen Polystyrolstandard).

Bevorzugt wird der Polyester hergestellt aus mindestens einer aromatischen Carbonsäure mit 8 bis 16 Kohlenstoffatomen und mindestens einem aliphatischen oder cycloaliphatischen Glykol mit 2 bis 10 Kohlenstoffatomen als Hauptkomponenten. Hier bedeutet "Hauptkomponente", dass die mindestens eine aromatische Carbonsäure mit 8 bis 16 Kohlenstoffatomen und das mindestens eine aliphatische oder cycloaliphatische Glykol mit 2 bis 10 Kohlenstoffatomen mindestens 50 Mol-%, vorzugsweise mindestens 60 Mol-%, stärker bevorzugt mindestens 65 Mol-%, bezogen auf die Gesamtmenge der Säurekomponente oder die Alkoholkomponente, ausmachen. Besonders bevorzugt wird als mindestens eine aromatische Carbonsäure mit 8 bis 16 Kohlenstoffatomen Terephthalsäure, Isophthalsäure oder deren Mischung eingesetzt. Der Polyester kann auch andere mehrbasische Carbonsäuren enthalten. Beispiel für die anderen mehrwertigen Carbonsäuren schließen ortho-Phthalsäure, Naphthalindicarbonsäure, Bernsteinsäure, Adipinsäure, Azelainsäure, Sebacinsäure, Decansäure, Dimersäure, Cyclohexandicarbonsäure, Trimellitsäure, usw. ein.

Die Alkoholkomponente des Polyesters umfasst vorzugsweise mindestens ein aliphatisches oder cycloaliphatisches Glykol mit 2 bis 10 Kohlenstoffatomen als Hauptkomponente. Bevorzugt enthält der Polyester als aliphatisches oder cycloaliphatisches Glykol mit 2 bis 10 Kohlenstoffatomen wenigstens einen Alkohol ausgewählt aus der Gruppe bestehend aus 3-Hydroxy-2,2-Dimethylpropyl-3-Hydroxy-2,2-Dimethylpropanoat (HPHP), Ethylenglykol, Diethylenglykol, Neopentylglykol, Cyclohexandimethanol, 1,3-Propandiol, 1,4-Butandiol und 2-Methyl-1,3-Propandiol.

Spezifische Beispiele der Kombination der Komponenten geeigneter Polyester umfassen (Terephthalsäure / Isophthalsäure) / Ethylenglykol = (90-70 / 10-30) / 100 Mol-%, Terephthalsäure / (Ethylenglykol / 1,2- Propylenglykol) = 100 / (80-50 / 20-50) Mol-%, (Terephthalsäure / Isophthalsäure) / (Ethylenglykol / 1,3-Propylenglykol) = (95-80 / 5-20) / ( 90-70 / 10-30) Mol-%, (Terephthalsäure / Isophthalsäure) / (Ethylenglykol / Butandiol-1,4) = (95-70 / 5-30) / (90-50 / 10-50) Mol-%, Terephthalsäure / (Ethylenglykol / 2-methyl-1,3-propandiol) = 100 / (60-80 / 40-20) Mol-%, (Terephthalsäure / Isophthalsäure) / (Ethylenglykol / 2 methyl-1,3-propandiol) = (95-80 / 5-20) / (70-90 / 30-10) Mol-%, Terephthalsäure / (Ethylenglykol / Neopentylglycol) = 100 / (85-60 /15-40) Mol-%, (Terephthalsäure / Isophthalsäure) / (Ethylenglykol / Neopentylglycol) = (95-80 / 5-20) / (90-70 / 10-30) Mol-%, Terephthalsäure / (Ethylenglykol / Diethylenglykol) = 100 / (75-50 / 25-50) Mol-%, (Terephthalsäure / Isophthalsäure) / (Ethylenglykol / Diethylenglykol) = (95-80 / 5-20) / (90-75 / 10-25) Mol-%, und Terephthalsäure / (Ethylenglykol / 1,4-Cyclohexandimethanol) = 100 / (80-60 / 20-40) Mol-%.

Beispiele für die mehr bevorzugte Kombination umfassen Terephthalsäure / (Ethylenglykol / Neopentylglykol) = 100 / (85-60 / 15-40) Mol%, (Terephthalsäure / Isophthalsäure) / (Ethylenglykol / Neopentylglykol) = ( 95-80 / 5-20) / (90-70 / 10-30) Mol-%, Terephthalsäure / (Ethylenglykol / Diethylenglykol) = 100 / (75-50 / 25-50) Mol-%, (Terephthalsäure / Isophthalsäure) / (Ethylenglykol / Diethylenglykol) = (95-80 / 5-20) / (90-75 / 10-25) Mol-% und Terephthalsäure / (Ethylenglykol / 1,4-Cyclohexandimethanol) = 100 / (80-60 / 20-40) Mol-%.

Neben Ethylenglykol, Diethylenglykol, Neopentylglykol, Cyclohexandimethanol, 1,3-Propandiol, 1,4-Butandiol und 2-Methyl-1,3-Propandiol kann der Polyester andere mehrwertige Alkohole als Alkoholkomponente enthalten. Beispiele anderer mehrwertiger Alkohole schließen 1,2-Butandiol, 1,3-Butandiol, 1,5-Pentandiol, 3-Methyl-1,5-Pentandiol, Hexandiol, Nonandiol, Dimerdiol, Ethylenoxid und / oder Propylenoxid-Addukte von Bisphenol A, Bisphenol F, Polyethylenglykol, Polypropylenglykol, Polytetramethylenglykol, 2-Butyl-2-ethyl-1,3-propandiol, Tricyclodecandimethanol, Neopentyl Hydroxypivalinsäureneopentylglykolester, 2,2,4-Trimethyl-1,5-pentandiol und Trimethylolpropan ein.

Besonders bevorzugte Polyester enthalten als Säurekomponente Terephthalsäure und/oder Isophthalsäure. Insbesondere bevorzugt sind Copolyester, die sowohl Terephthalsäure als/auch Isophthalsäure einpolymerisiert enthalten, wobei bevorzugt mehr Terephthalsäure als Isophthalsäure verwendet wird.

In einer Ausführungsform ist der verwendete Polyester vorzugsweise ein amorpher Polyester. In einer anderen bevorzugten Ausführungsform ist der verwendete Polyester vorzugsweise ein teilkristalliner oder kristalliner Polyester. Hierin beschreibt der Begriff "amorphe Polyester" einen Polyester, der keinen Schmelzpeak im zweiten Erwärmungsschritt hat, wenn er von -100 °C bis 300 °C bei einer Aufheizgeschwindigkeit von 10 K / min erhitzt wird, wieder auf -100 °C mit einer Abkühlungsgeschwindigkeit von 50 K / min gekühlt wird und wieder von -100 °C bis 300 °C bei einer Aufheizgeschwindigkeit von 10 K / min erhitzt wird, unter Verwendung eines Differential-Scanning-Calorimeter (DSC). Der Begriff "teilkristalline oder kristalline Polyester" beschreiben Polyester, die einen Schmelzpeak in einem der beiden Erwärmungsschritte aufweisen.

In einer bevorzugten Ausführungsform hat der teilkristalline oder kristalline Polyester einen Schmelzpeak mit einem Maximum von 80 bis 220 °C. Die untere Grenze des Schmelzpeakmaximum ist bevorzugt 100 °C, besonders bevorzugt 110 °C, während die obere Grenze des Schmelzpeakmaximum bevorzugt 200 °C, besonders bevorzugt 190 °C (bestimmt mittels DSC bei einer Heizrate von 10K/min) ist. Entsprechende Polyester sind insbesondere gut geeignet für Anwendungen, bei denen die verschweißten Produkte höheren Temperaturen, z.B. Temperaturen von über 80 °C, ausgesetzt sind.

Der kristalline Polyester enthält, bezogen auf die Gesamtmenge der Alkoholkomponente (100 Mol-%), mindestens 50 Mol-%, stärker bevorzugt mindestens 55 Mol-%, besonders bevorzugt mindestens 60 Mol-% mindestens eines Alkohols aus der Gruppe bestehend aus Ethylenglykol, 1,3-Propandiol, 1,4-Butandiol, 1,6-Hexandiol und Cyclohexandimethanol.

Der mindestens eine Polyester kann sowohl Säuregruppen-termininert als auch Hydroxylgruppen-terminiert sein. In einer besonders bevorzugten Ausführungsform enthält der Primer mindestens einen Hydroxylgruppen-terminierten Polyester, insbesondere einen Hydroxylgruppen-terminierten Copolyester.

Bevorzugt enthält der Primer das mindestens eine Maleinsäureanhydrid enthaltenden Polymer, insbesondere die bevorzugten Maleinsäureanhydrid enthaltenden Polymere, in einer Menge von 10 bis 90 Gew.-%, insbesondere 20 bis 80 Gew.-%, bevorzugt 25 bis 70 Gew.-%, besonders bevorzugt 30 bis 60 Gew.%, jeweils bezogen auf den Polymergehalt des Primers, insbesondere jeweils bezogen auf das Gesamtgewicht des Primers. Bevorzugt enthält der Primer den mindestens einen Polyester, insbesondere die oben beschriebenen bevorzugten Copolyester, in einer Menge von 10 bis 90 Gew.-%, insbesondere 20 bis 80 Gew.-%, bevorzugt 25 bis 70 Gew.-%, besonders bevorzugt 30 bis 60 Gew.%, jeweils bezogen auf den Polymergehalt des Primers, insbesondere jeweils bezogen auf das Gesamtgewicht des Primers. Besonders bevorzugt enthält der Primer das mindestens eine Maleinsäureanhydrid enthaltenden Polymer und den mindestens einen Polyester in einem Gewichtsverhältnis von 5:1 bis 1:5, insbesondere 2:1 bis 1:2, vorzugsweise 1,5:1 zu 1:1,5, bevorzugt 1:1 bis 1:1,5. In einer weiteren bevorzugten Ausführungsform weist der Primer einen kleineren Gewichtsanteil des Maleinsäureanhydrid enthaltenden Polymers auf im Vergleich zum Gewichtsanteil des Polyesters.

Neben dem Maleinsäureanhydrid enthaltenden Polymer und dem Polyester kann der Primer vorzugsweise mindestens ein weiteres Polymer enthalten. Das mindestens eine weitere Polymer bzw. Copolymer ist vorzugsweise zu mindestens einem der beiden zu verschweißenden Kunststoffe und zu mindestens einem Primer-Polymere kompatibel. Besonders bevorzugt enthält der Primer mindestens ein weiteres Polymer, auf welches einer der zu fügenden Kunststoffe basiert, vorzugsweise jeweils die oben spezifizierten. Die Verwendung eines zusätzlichen Polymers neben den erfindungsgemäßen (Co)polymeren im Primer kann zu einer weiteren Verbesserung der Festigkeit führen.

Als kompatibles weiteres Polymer wird vorzugsweise ein Polymer eingesetzt, welches zu einem, insbesondere zu beiden zu fügenden Kunststoffen und insbesondere auch zu mindestens einem der oben genannten erfindungsgemäßen Primer-Polymere eine gewichtete quadratische Distanz der Hansen-Parameter $(R_a)^2$ von kleiner 22 MPa, insbesondere von kleiner 17 MPa, bevorzugt von kleiner 15 MPa, besonders bevorzugt von kleiner 12 MPa aufweist.

Die gewichtete quadratische Distanz der Hansen-Parameter $(R_a)^2$ bestimmt sich gemäß der folgenden Formel:

$$(R_a)^2 = 4(\Delta\delta_D)^2 + (\Delta\delta_P)^2 + (\Delta\delta_H)^2$$

In dieser Formel ist $\delta_D$ der Hansen-Parameter für die Dispersionskräfte, $\delta_P$ der Hansen-Parameter für die Polarität und $\delta_H$ der Hansen-Parameter für die Wasserstoffbrückenbindungen. $\Delta\delta_D$, $\Delta\delta_P$ und $\Delta\delta_H$ stellen jeweils die Differenzen dieser Hansen-Parameter der zu vergleichenden Kunststoffe bzw. Polymere dar, z.B. $\Delta\delta_D = (\delta_{D1} - \delta_{D2})$ der Polymere 1 und 2. Die Bestimmung der Werte der einzelnen Hansen-Parameter $\delta_D$, $\delta_P$ und $\delta_H$ für die jeweiligen Kunststoffe bzw. Polymere erfolgt gemäß dem Buch "Hansen Solubility Parameters: A User's Handbook" von Charles M. Hansen (secand edition; Taylor & Francis Group; 2007; ISBN-10 0-8493-7248-8). Dieser Quelle können bereits viele Werte einzelner Polymere entnommen werden. Gemäß der in diesem Buch beschriebenen Methode können die Hansen-Parameter vorzugsweise mit dem Programm HSPIP (4th Edition 4.1.07) aus der mitgelieferten Datenbank entnommen, oder, falls nicht vorhanden, mit der enthaltenen "DIY" - Funktionalität des Programms, vorzugsweise unter Verwendung des mitgelieferten neuronalen Netzes, wie in der Hilfe beschrieben, bestimmt werden. Das HSPIP Programm ist über die Fa. Steven Abbott TCNF Ltd erhältlich.

Der Gehalt des weiteren Polymers am Primer ist bevorzugt 1 - 40 Gew.-%, insbesondere 5 - 30 Gew.-%, besonders bevorzugt 10 - 20 Gew.-%, jeweils bezogen auf das Gesamtgewicht des Primers. Der Gehalt des weiteren Polymers am Polymergehalt des Primer ist bevorzugt 5 - 75 Gew.-%, insbesondere 30 - 70 Gew.-%, besonders bevorzugt 40 - 65 Gew.-%, jeweils bezogen auf den Gesamtpolymeranteil des Primers (Primer ohne Lösungsmittel und ohne Füllstoffe).

Neben dem (Co)polymeren und dem weiteren Polymer kann der Primer auch ein Lösungsmittel, insbesondere ein organisches Lösungsmittel enthalten. Vorzugsweise enthält der Primer einen Lösungsmittelgehalt von 10 - 90 Gew.-

%, insbesondere 50 - 85 Gew.-%, besonders bevorzugt 60 - 80 Gew.-%, jeweils bezogen auf das Gesamtgewicht des Primers.

Geeignete Lösungsmittel sind alle gängigen Lösungsmittel, wie zum Beispiel Wasser, Alkohole, Ketone, wie Mehylisobutylketon (MIBK) oder Cyclohexanon (CH), Ether, wie Diethylether oder Tetrahydrofuran (THF), Ester, wie Essigsäureethylester, oder Carbonate, wie Dimethyl- oder Dipropylcarbonat, Xylol, Toluol oder Gemische daraus.

In einer bevorzugten Ausführungsform enthält der Primer organische Lösungsmittel. Besonders bevorzugte Lösungsmittel sind Lösungsmittel mit einem Dampfdruck bei 20 °C von 1 bis 600 hPa, insbesondere 2 bis 200 hPa, besonders bevorzugt 5 bis 20 hPa. Lösemittel mit einem entsprechenden Dampfdruck haben sich besonders vorteilhaft dabei herausgestellt, die Blasenbildung in der Primerschicht beim Abdampfen zu minimieren bzw. zu verhindern. Insbesondere bevorzugt enthält der Primer ein Lösungsmittel ausgewählt aus Tetrahydrofuran, Mehylisobutylketon, Cyclohexanon und Gemische daraus, besonders bevorzugt enthält der Primer Tetrahydrofuran oder eine Mischung aus Mehylisobutylketon und Cyclohexanon. Wenn eine Mischung aus Mehylisobutylketon und Cyclohexanon als Lösungsmittel eingesetzt wird, enthält diese Mischung vorzugsweise 10 - 50 Gew.-%, insbesondere 20 - 35 Gew.-% Cyclohexanon, jeweils bezogen auf die gesamte Mischung an Lösungsmittel.

Wenn organische Lösungsmittel eingesetzt werden, beträgt der Gesamtpolymergehalt des Primers vorzugsweise 10 - 90 Gew.-%, insbesondere 15 - 50 Gew.-%, besonders bevorzugt 20 - 40 Gew.-%, jeweils bezogen auf das Gesamtgewicht des Primers. Der Gesamtpolymergehalt entspricht dem Gehalt aller im Primer verwendeten Polymere, insbesondere der erfindungsgemäßen Polymere und der oben beschriebenen weiteren Polymere.

In einer anderen bevorzugten Ausführungsform liegt der Primer in Form einer wässrigen Dispersion oder Emulsion vor. In diesem Fall sind die erfindungsgemäßen Polymere bzw., wenn vorhanden, die weiteren Polymere in Wasser emulgiert oder dispergiert. In diesem Fall beträgt der Gesamtpolymergehalt des Primers vorzugsweise 2 - 90 Gew.-%, insbesondere 5 - 50 Gew.-%, besonders bevorzugt 10 - 35 Gew.-%, jeweils bezogen auf das Gesamtgewicht des Primers. Für die wässrige Dispersion/Emulsion ist es vorteilhaft, dass die Polymerkomponente im Wesentlichen nur aus den erfindungsgemäßen Polymeren und dem gegebenenfalls vorhandenen oben genannten weiteren Polymer, insbesondere nur aus den erfindungsgemäßen Polymeren besteht. Unter dem Begriff "im Wesentlichen aus" wird erfindungsgemäß verstanden, wenn die Polymerkomponente zu mehr als 95 Gew.-%, vorzugsweise mehr als 97 Gew.-%, ganz besonders bevorzugt mehr als 99 Gew.-% aus den erfindungsgemäßen Polymeren und dem gegebenenfalls vorhandenen oben genannten weiteren Polymer, insbesondere nur aus den erfindungsgemäßen Polymeren besteht.

Neben den erfindungsgemäßen Polymeren, den oben genannten weiteren Polymeren und einem Lösungsmittel kann der Primer weitere Komponenten enthalten, wie zum Beispiel Füllstoffe, (Fluoreszenz)-Farbstoffe und Pigmente, rheologische Hilfsmittel, Entschäumungshilfen, Emulgatoren, Tenside, Benetzungshilfsmittel, Stabilisatoren oder Weichmacher. Abgesehen von Farbstoffen, Stabilisatoren, insbesondere Thermostabilisatoren und Hydrolysestabilisatoren, Pigmenten und Tensiden ist der Primer jedoch vorzugsweise im Wesentlichen frei von weiteren Komponenten, insbesondere im Wesentlichen frei von jeglichen anderen Komponenten. Unter dem Begriff "im Wesentlichen frei von" wird erfindungsgemäß verstanden, wenn der Primer weniger als 5 Gew.-%, vorzugsweise weniger als 1 Gew.-%, ganz besonders bevorzugt weniger als 0,1 Gew.-% der jeweiligen Substanzen, insbesondere nicht die jeweiligen Substanzen enthalten.

Vorzugsweise enthält der Primer mindestens einen Stabilisator, insbesondere mindestens einen Thermostabilisator und/oder Hydrolysestabilisator, bevorzugt in einer Menge von 0,01 bis 10 Gew.-% , insbesondere 0,1 bis 7 Gew.-%, vorzugsweise 1 bis 5 Gew.-%, jeweils bezogen auf die Gesamtmenge des Primers.

Bei dem erfindungsgemäßen Verfahren zum Verschweißen von einem Polyolefin-Kunststoff mit einem zweiten Kunststoff wird ein Primer verwendet, wobei der Primer mindestens ein Maleinsäureanhydrid enthaltendes Polymer, insbesondere mindestens ein Maleinsäureanhydrid gepfropftes Polyolefin-Polymer, und mindestens einen Polyester, insbesondere mindestens einen Copolyester, enthält.

Der Primer dient bei dem erfindungsgemäßen Verfahren als Hilfsmittel für die Verschweißung der beiden unterschiedlichen Kunststoffe durch jeweiliges Aufschmelzen. Durch den verwendeten Primer enthaltend ein erfindungsgemäßes Polymer kann eine Verträglichkeit zwischen den beiden Fügepartnern hergestellt werden, wodurch eine stabile und dauerhafte stoffschlüssige Verbindung zwischen den beiden Kunststoffen hergestellt werden kann.

Der Primer kann durch verschiedenste Verfahren auf die Oberfläche eines oder beider Fügepartner aufgetragen werden. So kann die Auftragung zum Beispiel durch eine Dosiervorrichtung, durch eine Nadel und Dosierroboter, durch Spritzgießen, durch Extrusion, durch Folienauftrag, durch Auftrag als Hotmelt, durch Aufsprühen, durch Aufstreichen oder durch Dippen erfolgen. Dabei kann der Primer entweder nur auf eine Oberfläche oder auf beide Oberflächen der zu verschweißenden Substrate aufgetragen werden.

Für den Fall, dass der Primer Lösungsmittel enthält, wird der Primer nach dem Auftrag auf eine oder beide Oberflächen vorzugsweise so lange getrocknet bis das Lösungsmittel soweit verdampft ist, dass eine nicht klebrige, dimensionsstabile Primerschicht entstanden ist. Insbesondere ist der Primer bereits nach wenigen Sekunden und bis zu mehreren Wochen schweißbar. Vorzugsweise wird der Primer nach dem Auftrag für mindestens eine Stunde, bevorzugt für mindestens 12 Stunden getrocknet.

Vorzugsweise erfolgt der Auftrag auf eine oder beide Oberflächen der zu verschweißenden Substrate in der Weise, dass der Primer eine Schichtdicke von 1 μm bis 5000 μm, insbesondere 100 - 3000 μm, bevorzugt 300 - 2000 μm, besonders bevorzugt 500 - 1000 μm hat. Bevorzugt sind vor allem Schichtdicken von größer 100 μm. Falls ein Lösungsmittel im Primer enthalten war, bezieht sich die Schichtdicke auf den vom Lösemittel getrockneten Primer.

Nach dem Auftragen auf einen bzw. beide Oberflächen der zu verschweißenden Substrate und gegebenenfalls dem Trocknen des Primers können die zu verschweißenden Substrate mit einem gängigen Schweißverfahren miteinander verbunden werden. Das Schweißen von Kunststoffen erfolgt im Allgemeinen durch eine lokale Plastifizierung der Fügepartner in der Fügeebene und das Fügen unter Druck. Die Prozessparameter sind so zu wählen, dass ein ausgeprägtes Quetschfließen der Schmelze zu einer optimalen Verbindung der Fügepartner in der Fügeebene führt. Die Erwärmung kann über Konvektion, Kontakterwärmung, Strahlung oder Reibung erfolgen. Der unterschiedliche Energieeintrag zum Plastifizieren kann auf vielfältige Art und Weise erfolgen und hat zu verschiedenen Prozessen zum Schweißen von Kunststoffen geführt. Geeignete Schweißverfahren sind beispielsweise:

- Heißgasschweißen [HG](Hot gas welding)
  Konvektive Erwärmung mit einem heißen Gasstrom, im allgemeinen Luft, zweistufiger Prozess
- Heizelementschweißen [HE] (Hot plate welding)
  Kontakterwärmung, zweistufiger Prozess
- Ultraschallschweißen [US] (Ultrasonic welding)
  Erwärmung durch Reibung, eine transversale Welle im Ultraschallbereich führt zu einer Erwärmung in der Grenzschicht, einstufiger Prozess
- Hochfrequenzschweißen [HF] (High frequency welding)
  Erwärmung durch innere Reibung, polare Moleküle orientieren sich entsprechen eines hochfrequenten Magnetfelds, einstufig, nur für polare Kunststoffe und Folien eingesetzt
- Vibrationsschweißen [VIB] (Friction welding: Linear; Orbital; Spin; Angle)
  Erwärmung durch Reibung, einstufiger Prozess
- Laserschweißen [LW] (Laser welding: Kontur, Simultan, Quasisimultan, Maske)
  Erwärmung durch Strahlung, Strahlung kohärent, Lasertransmissionsschweißen, im Allgemeinen einstufig (zweistufig möglich)
- Infrarotschweißen [IR] (Infrared welding)
  Erwärmung über Strahlung, Strahlung inkohärent, zweistufig

Die oben angeführten Schweißverfahren können gegebenenfalls auch kombiniert werden wie zum Beispiel das Infrarotschweißen mit dem Vibrationsschweißen. Besonders bevorzugt erfolgt das Verschweißen der Kunststoffe durch ein Schweißverfahren ausgewählt aus Heizelementschweißen, Wärmekontakt- oder Wärmeimpulsschweißen, Warmgas- oder Heissgasschweißen, Mikrowellen- oder Induktionsschweißen. Laserstumpf- oder Laserdurchstrahlschweißen, Infrarotschweißen, Ultraschallschweißen, sowie Kombinationen daraus, insbesondere ausgewählt aus Infrarotschweißen, Heizelementschweißen, Vibrationsschweißen, Ultraschallschweißen, sowie Kombinationen daraus.

Besonders bevorzugt ist ein Verfahren zum stoffschlüssigen Fügen der zwei Kunststoffe unter Verwendung des Primers, beinhaltend die folgenden Schritte.

- Bereitstellen des ersten Kunststoffes aufweisend eine erste Fügezone,
- Bereitstellen des zweiten Kunststoffes aufweisend eine zweite Fügezone,
- Vorwärmen der ersten Fügezone,
- Auftragen des Primers auf die vorgewärmte erste Fügezone, insbesondere bei lösungsmittelfreien Primern,
- In-Kontakt-bringen der mit dem Primer versehenen ersten Fügezone mit der zweiten Fügezone,
- Stoffschlüssiges Verbinden der ersten Fügezone mit der zweiten Fügezone insbesondere durch den Einsatz üblicher Schweißverfahren von Kunststoffen wie beispielsweise dem Infrarotschweißen, Heizelementschweißen, Warmgasschweißen, Vibrationsschweißen, Ultraschallschweißen.

Für das Schweißen von Kunststoffen kann allgemein das Verständnis der DIN 1910-3:1977-09 angewendet werden. Mithin kann darunter ein stoffschlüssiges Verbinden von thermoplastischen Kunststoffen unter Zuhilfenahme von Wärme oder/und Druck verstanden werden. Die Erwärmung kann beispielsweise auf Basis von Kontakterwärmung (Schweißen durch festen Körper), Konvektionserwärmung (Schweißen durch Warmgas), Strahlungserwärmung (Schweißen durch Strahlen) und Erwärmung durch Reibung (Schweißen durch Bewegung) sowie das Schweißen durch elektrischen Strom erfolgen.

In einer vorteilhaften Weiterbildung kommt ein Primer zum Einsatz, der derart ausgewählt und auf das Verfahren abgestimmt ist, dass das Auftragen auf eine erwärmte und/oder heiße Fügezone mit einer Temperatur, die kleiner ist als die Zersetzungstemperatur der Polymere im Primer, keinen Einfluss auf die innere chemische Vernetzung des Primers hat.

Vorteilhaft ist es, die erste Fügezone des ersten Kunststoffes vorzuwärmen. Für das Vorwärmen können dem Fachmann bekannte und sich für den Einsatzzweck eignende Hilfsmittel und Techniken zum Einsatz kommen. Insbesondere eignet sich der Einsatz von Warmgas oder Plasma zur Vorwärmung. Denkbar ist auch eine Vorwärmung mittels Bestrahlung, insbesondere Infrarotstrahlung oder Laserstrahlung. Auch kann ein Heizelement oder ein beheiztes Werkzeug zum Einsatz kommen, um die erste Fügezone vorzuwärmen. Schließlich ist auch ein Vorwärmen in einem Ofen oder einem beheizten Raum denkbar. Denkbar ist eine Vorwärmung des gesamten Kunststoffes und somit auch besagter Fügezone. Alternativ oder zusätzlich ist aber auch eine Vorwärmung lediglich der Fügezone selbst möglich.

In einer vorteilhaften Weiterbildung liegt der Abstand der Heizvorrichtung während der Vorwärmung zum Kunststoff, insbesondere zur vorzuwärmenden ersten Fügezone, insbesondere des wärmeabgebenden Bereichs der Heizvorrichtung oder des wärmeauslösenden Bereichs der Heizvorrichtung oder der zur vorzuwärmenden wirksamen Oberfläche der Heizvorrichtung oder die hinsichtlich der ersten Fügezone gegenüberliegenden Bereich der Heizvorrichtung in einem Bereich von 0,5 mm bis 100 mm, vorzugsweise im Bereich von 1 mm bis 60 mm. Denkbar ist alternativ auch, dass eine Erwärmung durch und/oder bei Kontaktierung insbesondere der ersten Fügezone durch das Heizelement der Heizvorrichtung erfolgt.

Ein weiterer Vorteil ist die Auswahl des Kunststoffes für den ersten Fügepartner und die Einstellung der Verfahrensparameter auf den ersten Kunststoff derart, dass die erste Fügezone beim Vorwärmen aufgeschmolzen wird und dass beim Vorwärmen eine Schmelzeschicht in der ersten Fügezone erzeugt wird. Die Dicke der Schmelzeschicht liegt in einer bevorzugten Ausführungsform vorzugsweise im Bereich von 0,05 mm bis 6 mm, besonders bevorzugt im Bereich von 0,1 mm bis 5 mm. Eine derartige Schmelzeschicht kann zu einer besseren Adhäsion und/oder Diffusion und/oder Wechselwirkung der Moleküle führen und in Verbindung mit einem gewissen Fluss zu einer besseren Verbindungsschicht. Befindet sich die Grenzschicht des ersten Kunststoffs im schmelzeflüssigen Zustand, kann es mit dem Primer zu Wechselwirkungen bis hin zu chemischen Bindungen kommen. Die Schmelzschicht kann insbesondere abhängig sein von der Bauteilgeometrie und der jeweiligen Bauteilauslegung. Vorzugsweise sind die Verfahrensparameter derart eingestellt und/oder gewählt, dass es zu keiner Verformung der Bauteile kommt. Bevorzugt ist ein Ausgleich von Temperaturunterschieden zwischen der Fügezone und dem aufzutragenden Primer durch geeignete Maßnahmen und/oder Verfahrensschritte vorgesehen. Dabei ist es insbesondere denkbar den Primer vorzuwärmen, um den Temperaturunterschied zwischen dem vorzugsweise thermoplastischen Primer und der ersten Fügezone zu reduzieren. Dies kann beispielsweise der schnellen Abkühlung der ersten Fügezone zwischen den Prozessschritten entgegenwirken.

Optional erfolgt vorzugsweise vor dem Schritt des Vorwärmens der ersten Fügezone eine Vorbehandlung der ersten Fügezone. Alternativ oder zusätzlich kann auch eine Vorbehandlung der zweiten Fügezone erfolgen. Als mögliche Vorbehandlung ist beispielsweise das Reinigen mittels eines Lösungsmittels oder eines beispielsweise alkalischen Kunststoffreinigers denkbar. Auch kann eine mechanische Vorbehandlung zum Einsatz kommen, insbesondere mittels Kratzen, Schmirgeln, Bürsten oder Strahlen. Denkbare chemische Vorbehandlungen sind insbesondere das Beizen oder der Einsatz reaktiver Gase. Darüber hinaus könnte sich der Einsatz einer thermischen, chemischen oder/und physikalischen Vorbehandlung als zweckmäßig erweisen, insbesondere mittels Gasflamme oder Plasmabogen. Alternativ oder zusätzlich kann eine elektrische Vorbehandlung mittels Corona-entladung, bei der die erste Fügezone und/oder die zweite Fügezone einer elektrischen Corona-entladung ausgesetzt wird damit an der entsprechenden Oberfläche polare Moleküle entstehen. Eine weitere Möglichkeit ist die Plasmabehandlung, vorzugsweise unter Einsatz einer Plasmadüse für die Vorbehandlung der Fügezone, insbesondere um eine Aktivierung und/oder Reinigung der entsprechenden Oberfläche zu erreichen. Gleichwohl kann sich auch eine Beschichtung mittels Plasma als zweckmäßig erweisen. Eine weitere Möglichkeit ist das Beflammen der Fügezone zur Erhöhung der Oberflächenspannung bei geeigneten Kunststoffen. Eine weitere Art der Vorbehandlung ist die Bestrahlung mittels UV-Strahlen, Elektronenstrahlen, radioaktiven Strahlen oder mittels Laser. Schließlich kann die Vorbehandlung in Form einer Beschichtung erfolgen, insbesondere durch einen Anstrich oder einen Haftvermittler. Denkbar ist auch eine Vorbehandlung des ersten Kunststoffes oder der Fügezonen des ersten Kunststoffes in einem größeren zeitlichen Abstand vor dem Vorwärmen. So ist beispielsweise denkbar, die Vorbehandlung schon im Rahmen des Fertigungsprozesses des ersten Kunststoffes vorzunehmen, um im erfindungsgemäßen Verfahren den vorbehandelten Kunststoff weiterverarbeiten zu können.

Der Auftrag des Primers ist auf unterschiedliche Art und Weise denkbar. Beispielsweise und insbesondere im industriellen Bereich ist der Auftrag mittels einer automatisierten Auftragshilfe, insbesondere mittels eines Dosierroboters denkbar. Selbiger kann dabei mit einem Nadel und/oder einem Höhensensor ausgerüstet sein, um komplexe Dosierungen durchführen zu können. Auch kann der Auftrag des Primers mittels Spritzgießen erfolgen, indem der Primer in einer Spritzgießmaschine plastifiziert und in die den ersten Kunststoff mit der ersten Fügezone enthaltenden Form unter Druck eingespritzt wird. Alternativ ist ein Folienauftrag denkbar, wobei in einem ersten Schritt mittels Folienblasen oder Flachfolienextrusion zunächst eine Folie aus dem Primer hergestellt wird. Anschließend kann die Folie beispielsweise mittels eines Schneid- oder Stanzverfahrens in eine beliebige Form zugeschnitten und in einem weiteren Schritt nach dem genannten Vorwärmen auf die erste Fügezone aufgebracht werden. Hierbei hat sich der Einsatz von Folien/Platten mit einer Stärke im Bereich von 1 $\mu$m - 5000 $\mu$m als zweckmäßig erwiesen. Weitere denkbare Auftragsmöglichkeiten sind das Extrusionsschweißen, bei dem der Primer in Form eines Schweißdrahtes vorliegt oder in einem Extruder aufgeschmolzen und in Schmelze auf die erste Fügezone appliziert werden kann. Auch ist die Bereitstellung des Primers in Form eines Schweißdrahtes möglich, um eine Applikation mittels Heißluftschweißen zu ermöglichen. Eine weitere Möglichkeit ist das Aufbringen des Primers mittels eines Sprühverfahrens. Auch beim Aufbringen beim Spritzguss ist eine Vorbehandlung oder/und Vorwärmung und/oder lokal unterschiedliche Temperierung des Spritzgießwerkzeug möglich. Selbstverständlich sind auch andere, dem Fachmann bekannte und sich für den spezifischen Anwendungsfall eignende Auftragsarten denkbar.

Ein weiterer Vorteil ist die weitere Erwärmung oder Erwärmung der ersten Fügezone während des Auftrags des Primers, insbesondere um einen Temperaturabfall der ersten Fügezone zwischen dem Vorwärmen und dem Auftragen des Primers zu vermeiden. Dies kann durch den oben beschriebenen Verfahrensschritt zum Vorwärmen erfolgen, welcher der Einfachheit halber während des Auftrags fortgeführt werden kann. Alternativ oder zusätzlich ist eine zusätzliche Erwärmung insbesondere mittels eines weiteren Verfahrensschrittes möglich. So kann sich beispielsweise als zweckmäßig erweisen, ein simultanes Erwärmen der ersten Fügezone durchzuführen, beispielsweise mittels simultanen Bestrahlens der ersten Fügezone mit Strahlung, erzwungene Konvektion, Kontakterwärmung während des Auftrages, um einen Temperaturabfall der ersten Fügezone nach dem Vorwärmen zu vermeiden.

In einer vorteilhaften Weiterbildung wird der Primer derart aufgebracht, dass eine Verbindungsschicht mit einer Dicke im Bereich von 1 µm bis 5 mm, vorzugsweise im Bereich von 10 µm bis 3 mm auf der ersten Fügezone angeordnet ist. Unter der Dicke der Verbindungsschicht ist dabei die Materialdicke der Verbindungsschicht auf der ersten Fügezone zu verstehen.

Ein weiterer Vorteil ist das Auftragen des Primers mittels einer Dosiervorrichtung auf die erste Fügezone unter Relativbewegung zwischen erster Fügezone und der Dosiervorrichtung, wobei mittels einer Heizvorrichtung die erste Fügezone, auf welche der Primer aufgetragen wird, unter Relativbewegung zwischen erster Fügezone und Heizvorrichtung, vor dem Auftrag des Primers vorgewärmt wird, wobei der Auftrag des Primers über die Dosiervorrichtung im vorgewärmten Zustand der ersten Fügezone erfolgt.

Hierbei hat es sich als besonders vorteilhaft erwiesen, dass die Heizvorrichtung bei der Vorwärmung an der ersten Fügezone mit einer Geschwindigkeit im Bereich von 10 mm/min bis 100 m/min, vorzugsweise im Bereich von 10 mm/min bis 30 m/min vorbeigeführt wird.

Ferner kann es von Vorteil sein, dass die Heizvorrichtung der Dosiervorrichtung vorzugsweise in einem definierten und konstanten Abstand voreilt. Insbesondere ist eine derartige Durchführung des Verfahrens von Vorteil, bei der der Primer mittels einer Dosiervorrichtung auf die erste Fügezone unter Relativbewegung von Dosiervorrichtung und erster Fügezone im Bereich von 10 mm/min bis 100 m/min, vorzugsweise im Bereich von 10 mm/min bis 30 m/min aufgetragen wird, wobei mittels einer Heizvorrichtung besagte Fügezone, auf welche der Primer aufgetragen wird, unter Relativbewegung von Heizvorrichtung und erster Fügezone vor dem Auftrag des Primers vorgewärmt wird, wobei die Heizvorrichtung der Dosiervorrichtung oder einer Düse der Dosiervorrichtung zum Auftragen des Primers in einem zeitlichen Abstand im Bereich von 0,1-10 s vorzugsweise simultan voreilt.

Hierbei hat es sich als besonders vorteilhaft erwiesen, eine Beschichtungseinheit bestehend aus Dosiervorrichtung und Heizvorrichtung einzusetzen. Unter einer Beschichtungseinheit kann dabei insbesondere eine Einheit verstanden werden, die eine feste Verbindung von Heizvorrichtung und Dosiervorrichtung vorsieht, so dass die Heizvorrichtung der Dosiervorrichtung in vorzugsweise einem definierten und konstanten Abstand bei der Relativbewegung voreilt, um sicherzustellen, dass die erste Fügezone unmittelbar vor dem Auftrag des Primers vorgewärmt wird. Selbstverständlich ist hierbei auch eine Einstellbarkeit des Abstandes oder bei konvektiver Vorwärmung das Einstellen des Volumenstroms bzw. Düsendurchmessers des Mediums, insbesondere durch geeignete mechanische, elektromechanische oder auch pneumatisch betriebene Stellmittel denkbar.

Andererseits kann unter der Beschichtungseinheit auch eine Heizvorrichtung und eine Dosiervorrichtung als zwei völlig voneinander getrennte oder separierte Baugruppen verstanden werden, die jedoch die gleiche oder im Wesentlichen die gleiche Relativbewegung hinsichtlich des Kunststoffes eingehen, um sicherzustellen, dass der Auftragsort des Primers unmittelbar vor dem Auftrag des Primers vorgewärmt wird.

In einer vorteilhaften Weiterbildung gehen Heizvorrichtung und Dosiervorrichtung eine zwar im Wesentlichen gleiche primäre Relativbewegung oder Grundrichtung hinsichtlich des Kunststoffes ein, jedoch erfährt zumindest eine von beiden genannten Vorrichtungen zusätzlich zur besagten primären Relativbewegung eine zusätzliche Relativbewegung hinsichtlich des Kunststoffes. So kann beispielsweise die Heizvorrichtung und/oder die Dosiervorrichtung neben der primären Relativbewegung, in der beispielsweise auch der Auftrag des Primers erfolgen kann, eine oder mehrere sekundäre Relativbewegungen eingehen. Beispielsweise kann insbesondere die Heizvorrichtung und/oder die Dosiervorrichtung eine um die primäre Relativbewegung kreisende oder mäanderförmige sekundäre Relativbewegung eingehen oder erfahren.

Dabei kann der Kunststoff auf der einen Seite oder die Heizvorrichtung und Dosiervorrichtung oder beide Vorrichtungen zusammen als Beschichtungseinheit auf der anderen Seite bewegt werden. Dabei ist es möglich, dass die Heizvorrichtung und Dosiervorrichtung oder beide Vorrichtungen zusammen als Beschichtungseinheit auf der einen Seite bzw. der Kunststoff auf der anderen Seite stillstehen oder jeweils mit dem sich bewegenden Teil in abweichende Richtung bewegt werden.

In einer vorteilhaften Weiterbildung erfolgt eine primäre Relativbewegung in einer Geschwindigkeit in einem Bereich von 10 mm/min bis 100 m/min, vorzugsweise im Bereich von 10 mm/min bis 30 m/min, so dass beispielsweise insbesondere auch durch geeignete Gestaltung der Heizvorrichtung möglichst kurze Verweilzeiten des Kunststoffes innerhalb der Heizfläche der Heizvorrichtung ergeben, insbesondere in einem Bereich von 1-60 s. Hierunter kann der Bereich bzw. der Raum um die Heizvorrichtung verstanden werden, der einen Einfluss auf die Temperatur im Sinne einer Temperaturerhöhung, also einer Vorwärmung der ersten Fügezone des ersten Kunststoffes hat. So kann beispielsweise eine zu große Aufheizung und eine Kunststoffschädigung oder Kunststoffbeeinträchtigung vermieden werden.

Zudem kann es sich als vorteilhaft erweisen, insbesondere zur Anbindung der Dosiervorrichtung und/oder der Heizvorrichtung an/in bestehende Fertigungslinien, die Heizvorrichtung mit einer Busschnittstelle auszustatten, insbesondere eines Profibus, oder einer Realtime-Ethernet-Schnittstelle.

Nach dem Aufbringen besagten Primers ist vorgesehen, die zweite Fügezone mit der Primerschicht in Kontakt zu bringen. Hierbei kann sich eine Fixierung beider Kunststoffe zueinander als zweckmäßig erweisen, insbesondere mittels dem Fachmann bekannter Spannvorrichtungen oder ähnlicher Hilfsmittel zur Fixierung.

Natürlich kann optional vor dem Schritt des In-Kontakt-Bringens der zweiten Fügezone mit der Primerschicht eine Vorbehandlung der zweiten Fügezone erfolgen. Dabei sind insbesondere alle oberhalb beschriebenen Techniken für eine Vorbehandlung denkbar. Denkbar ist auch eine Vorbehandlung des zweiten Kunststoffes oder der Fügezonen des zweiten Kunststoffes in einem größeren zeitlichen Abstand vor dem In-Kontakt-Bringen. So ist beispielsweise denkbar, die Vorbehandlung schon im Rahmen des Fertigungsprozesses des zweiten Kunststoffes vorzunehmen, um im erfindungsgemäßen Verfahren einen vorbehandelten Kunststoff weiterverarbeiten zu können. Die Vorbehandlung des zweiten Kunststoffes kann auch den Auftrag des Primers auf die zweite Fügezone beinhalten. Dabei ist vorzugsweise auch eine Vorwärmung der zweiten Fügezone vor dem Auftrag des Primers denkbar. Die obigen Ausführungen sind an dieser Stelle ebenfalls bevorzugt.

Es schließt sich an das oberhalb beschriebene In-Kontakt-bringen von zweiter Fügezone und Primer ein Fügeprozess an, in dem die behandelten und/oder beschichteten Fügepartner durch Wärmezufuhr plastifiziert und vorzugsweise unter Einwirkung von Druck miteinander stoffschlüssig verbunden werden. Denkbar ist für diese stoffschlüssige Verbindung der zweiten Fügezone mit dem Primer der Einsatz einer Wärmezufuhr mittels Wärmeleitung, beispielsweise mittels Heizelementschweissen und/oder Wärmekontaktschweißen und/oder Wärmeimpulsschweißen; durch Reibung, insbesondere Ultraschall-, Reib-/Vibrations- oder Hochfrequenzschweissen; Mikrowellen- oder Induktionsschweißen; durch Konvektion, wie beispielsweise Warmgas- oder Heissgasschweissen; mittels Strahlung, beispielsweise Infrarot-, Laserstumpf- oder Laserdurchstrahlschweissen oder auch durch Kombination zweier oder mehrerer dieser Techniken.

Ein weiterer Gegenstand dieser Erfindung sind gemäß dem erfindungsgemäßen Verfahren hergestellte Gegenstände bzw. Produkte.

Offenbart ist die Verwendung des Primers zur Verschweißung von einem Polyolefin-Kunststoff mit einem Kunststoff.

Ausführunqsbeispiele

Verwendete Materialen und Abkürzungen:

PP = Polypropylen
PMMA = Polymethylmethacrylat
PBT = Polybutylenterephthalat
SAN = Styrol-Acrylnitril
PET = Polyethylenterephthalat
PC = Polycarbonat
ABS = Acrylnitril-Butadien-Styrol
MAH = Maleinsäureanhydrid
IR: Infrarot-Schweißen; IR-VIB: Infrarot/Vibrations-Schweißen; US: Ultraschallschweißen

Copolyester-1: amorpher Copolyester enthaltend als Monomer Isophthalsäure, Terephthalsäure, HPHP-Glykol, Neopentylglykol und Ethylenglykol mit einem Molekulargewicht von 15000 g/mol Copolyester-2: teilkristalliner Copolyester enthaltend als Monomer Isophthalsäure, Terephthalsäure, Adipinsäure und Butandiol mit einem Molekulargewicht von 18000 g/mol und einem Schmelzpeakmaximum von 138 °C

Copolyester-3: teilkristalliner Copolyester enthaltend als Monomer Isophthalsäure, Terephthalsäure und Butandiol mit einem Molekulargewicht von 20000 g/mol und einem Schmelzpeakmaximum von 179 °C

PP-MAH-1: Acrylatmodifiiertes Maleinsäureanhydrid gepfropftes Polypropylen
PP-MAH-2: Maleinsäureanhydrid modifiziertes Polypropylen mit einen MAH-Gehalt von 0,25 Gew.-%
PP-MAH-3: Maleinsäureanhydrid modifiziertes Polypropylen mit einen MAH-Gehalt von 7 Gew.-%

Beispiel 1:

Für ein Hotplatewelding-Schweißverfahren wurde ein Primer aus dem Copolyester 1 und dem PP-MAH-1 bzw. dem PP-MAH-2 im Verhältnis 50:50 w/w hergestellt. Mittels Heizplatte wurde eine Schmelze an einem PP- und einem nicht-polyolefinischen Fügeteil erzeugt, in eine Schmelze des Primers getaucht und dann miteinander gefügt. Dieses Hotplatewelding ergab folgende Zugfestigkeiten der geschweißten Proben mit kompatibilisierender Zwischenschicht 24 h nach dem Schweißen.

Tabelle 1

| Kunststoff 1 Fügeteil | Kunststoff 2 Fügeteil | Compound | Zugfestigkeit bei RT in N/mm$^2$ |
|---|---|---|---|
| PP | PC | Copolyester-1/PP-MAH-1 | 2,04 |
| | PMMA | | 6,23 |
| | PBT | | 3,83 |
| | PET | | 6,75 |
| | ABS | | 5,19 |

Tabelle 2

| Kunststoff 1 Fügeteil | Kunststoff 2 Fügeteil | Compound | Zugfestigkeit bei RT in N/mm$^2$ |
|---|---|---|---|
| PP | PC | Copolyester-1/PP-MAH-2 | 4,87 |
| | PMMA | | 6,93 |
| | PBT | | 9,68 |
| | PET | | 9,44 |
| | ABS | | 8,00 |

Hierdurch konnte sowohl die sehr gute Haftung des Primers auf PP und nicht-polyolefinischem Polymer als auch die hervorragende Schweißbarkeit der sonst nicht kompatiblen Kunststoffe nachgewiesen werden. Ohne eine zusätzliche Zwischenschicht konnten keine nennenswerten und messbaren Ergebnisse erzielt werden.

Beispiel 2:

In einem weiteren Versuch wurde ein Primer aus Copolyester1/PP-MAH-2/PP-MAH-3 im Verhältnis 50:25:25 w/w/w hergestellt. Dabei wurde der MAH-Gehalt durch das weitere PP-MAH deutlich erhöht. Im wie oben beschriebenen Hotplatewelding-Verfahren ergab dieser Primer für PP-PET 16,89 N/mm$^2$.

Beispiel 3:

Für Anwendungen bei höherer Temperatur wurden die teilkristallinen Copolyester-2 und Copolyester-3 jeweils mit PP-MAH-2 in einer 50:50 w/w-Mischung verwendet.
Die gemäß dem oben genannten Verfahren durchgeführten Hotplatewelding-Versuche zeigten folgende Zugfestigkeiten:

Tabelle 3

| Kunststoff 1 | Kunststoff 2 | Primer | Zugfestigkeit bei RT in N/mm$^2$ |
|---|---|---|---|
| PP | PMMA | Copolyester-2/PP-MAH-2 | 11,6 |
| | PC | | 4,9 |
| | ABS | | 11,0 |
| | PET | | 16,0 |
| | SAN | | 15,3 |

Tabelle 4

| Kunststoff 1 | Kunststoff 2 | Primer | Zugfestigkeit bei RT in N/mm$^2$ |
|---|---|---|---|
| PP | PMMA | Copolyester-3/PP-MAH-2 | 7,6 |
| | PC | | 15,3 |
| | ABS | | 12,1 |
| | PET | | 13,6 |
| | SAN | | 11,2 |

Somit wurden sehr hohe Festigkeiten für die genannten Materialkombinationen erreicht.

Beispiel 4:

Um die Haftung zum nicht polyolefinischen Fügeteil zu untersuchen, wurde das Mischverhältnis von Copolyester zu PP-MAH von 50:50 zu 60:40 und 70:30 (Gewichtsteile) variiert. Dazu wurde der Primer aus Copolyester-3 und PP-MAH-2 entsprechend hergestellt und die gemäß dem beschriebenen Hotplatewelding Verfahren geschweißten Materialien zeigten folgende Festigkeiten:

Tabelle 5

| PP mit Kunststoff | Festigkeit bei Mischverhältnis 50/50 in N/mm$^2$ | Festigkeit bei RT bei Mischverhältnis 60/40 in N/mm$^2$ | Festigkeit bei RT bei Mischverhältnis 70/30 in N/mm$^2$ |
|---|---|---|---|
| PMMA | 7,61 | 8,52 | 7,54 |
| PC | 15,29 | 15,19 | 5,66 |
| ABS | 12,05 | 10,53 | 7,29 |
| PET | 13,57 | 13,47 | -* |
| SAN | 11,24 | 16,47 | -* |
| * Da das Mischverhältnis 70/30 keine sehr hohe Festigkeit nach dem Schweißen zeigte, wurde diese Mischverhältnis nicht für PET und SAN getestet. | | | |

Beispiel 5:

Zum maschinellen Ultraschallschweißen wurden Standard AWS Probekörper verwendet, die aus zwei T-förmigen Fügeteilen bestanden. Die kompatibilisierende Primer-Schicht aus Copolyester-1 und PP-MAH-2 im Verhältnis 50:50 (Gewichtsteile) wurde als Folie mittels Heizpresse gepresst, in Streifen geschnitten, nach Vorwärmung eines der T-Probekörper auf die Schmelze gelegt und mit Warmgas aufgeschmolzen. Anschließend wurde das zweite T-Fügeteil auf das beschichtete Fügeteil mittels Ultraschall geschweißt. Neben der normalen Zugfestigkeit nach 24 h wurde die Zugfestigkeit nach Alterung bestimmt, wozu die Proben im Klimawechseltest in 10 Zyklen je 8 h zwischen -30 und +60 °C mit 98%r.h. gealtert wurden. 24 h nach dem Schweißen bzw. nach Alterung wurden die folgenden Zugfestigkeiten für die verschiedene Materialkombination PP-PET erhalten:

Tabelle 6

| PP Typen verschiedener Hersteller | Zugfestigkeit bei RT vor Alterung in N/mm$^2$ | Zugfestigkeit bei RT nach Alterung in N/mm$^2$ |
|---|---|---|
| PP-1 | 7,56 | 5,42 |
| PP-2 | 6,68 | 6,13 |
| PP-3 | 5,71 | 7,60 |

Entsprechend der Tabelle wurde bei den geschweißten Proben mit kompatibilisierender Primer-Zwischenschicht eine sehr hohe Festigkeit erhalten. Eine Referenz ohne Primer-Schicht hingegen wies keine messbare Festigkeit auf.

Im gleichen Verfahren wurden PP-PC und PP-PA geschweißt und direkt bzw. nach Klimawechseltest im Zugtest geprüft:

Tabelle 7

| Kunststoff 1 | Kunststoff 2 | Zugfestigkeit bei RT vor Alterung in N/mm$^2$ | Zugfestigkeit bei RT nach Alterung in N/mm$^2$ |
|---|---|---|---|
| PP | PC | 4,88 | 2,95 |
| | PA6 | 7,35 | 7,38 |

Auch bei diesem Versuch wurde eine sehr hohe Zugfestigkeit gemessen.

Die folgende Tabelle zeigt die Zugfestigkeiten vor und nach Alterung in den genannten Verfahren unter Verwendung anderer Primer-Schichten (jeweils 50:50 w/w Verhältnis):

Tabelle 8

| Kunststoff 1 | Kunststoff 2 | Primer | Zugfestigkeit bei RT vor Alterung in N/mm$^2$ | Zugfestigkeit bei RT nach Alterung in N/mm$^2$ |
|---|---|---|---|---|
| PP | PMMA | Copolyester-2/PP-MAH-2 | 5,99 | 3,53 |
| | | Copolyester-3/PP-MAH-2 | 6,20 | 3,40 |
| Somit konnten auch mit teilkristallinem Copolyester in der Primerschicht sehr hohe Festigkeiten erhalten werden. | | | | |

Beispiel 6:

Zum Infrarotschweißen wurde Platten aus den zu fügenden Polymeren verwendet, die an der Plattenkante von 130*3 mm$^2$ mit dem Primer beschichtet wurden. Das Auftragverfahren war dafür dasselbe wie für das Ultraschallschweißen beschrieben. Mit einem Primer aus Copolyester-1 und PP-MAH-2 (50:50 w/w) wiesen die Polymerkombinationen PP-PC; PP-PMMA und PP-ABS folgende Zugfestigkeiten nach dem Schweißen, mit und ohne Alterung auf:

Tabelle 9

| Kunststoffkombination | Zugfestigkeit bei RT vor Alterung in N/mm$^2$ | Zugfestigkeiten bei RT nach Alterung in N/mm$^2$ |
|---|---|---|
| PP/PC | 7,44 | 4,94 |
| PP/ABS | 6,36 | 3,98 |
| PP/PMMA | 5,43 | 2,09 |

Durch die Ergebnisse wurde gezeigt, dass der Primer auch zum IR-Schweißen geeignet war. Ohne einen Primer konnten die Kunststoffe nicht geschweißt werden. Im gleichen Versuch mit Copolyester-3 anstelle von Copolyester-1 konnten sogar Festigkeiten von 15,9 N/mm$^2$ für PP/PC und 10,4 N/mm$^2$ für PP/ABS erhalten werden.

**Patentansprüche**

1. Verfahren zum Verschweißen von einem Polyolefin-Kunststoff mit einem zweiten Kunststoff unter Verwendung eines Primers, wobei der Primer mindestens ein Maleinsäureanhydrid enthaltendes Polymer und mindestens einen Polyester enthält.

2. Verfahren zum Verschweißen nach Anspruch 1, **dadurch gekennzeichnet, dass** der Polyolefin-Kunststoff ausgewählt wird aus der Gruppen von Polyethylen-Kunststoff, insbesondere HD-Polyethylen-, MD-Polyethylen-, LD-Polyethylen-, UHMW-Polyethylen- oder LLD-Polyethylen-Kunststoff, und Polypropylen-Kunststoff, bevorzugt ein Polypropylen-Kunststoff ist.

3. Verfahren zum Verschweißen nach Anspruch 1 oder 2, **dadurch gekennzeichnet, dass** der Polyolefin-Kunststoff zu mehr als 90 Gew.-% ein Polyolefin-Polymer, insbesondere ein Polyethylen und/oder Polypropylen, jeweils bezogen auf den gesamten Polyolefin-Kunststoff enthält und/oder der Polyolefin-Kunststoff Molmassen als Gewichtsmittel Mw von größer 10000 g/mol aufweist.

4. Verfahren zum Verschweißen nach einem der Ansprüche 1 bis 3, **dadurch gekennzeichnet, dass** der zweite Kunststoff ausgewählt wird aus Kunststoffen aus Polycarbonat (PC), Acrylnitril-Butadien-Styrol (ABS), Polymethylmethacrylat (PMMA), Polyethylenterephthalat (PET), Polybutylenterephthalat (PBT), Polystyrol (PS), Poly-Styrol-Acrylnitril (SAN), Poly-Acrylester-Styrol-Acrylnitril (ASA), Methylmethacrylat-Acrylonitril-Butadien-Styrol (MABS), High Impact Polystyrol (HIPS), Polyamid (PA) bzw. Mischungen daraus.

5. Verfahren zum Verschweißen nach einem der Ansprüche 1 bis 4, **dadurch gekennzeichnet, dass** das mindestens eine Maleinsäureanhydrid enthaltende Polymer des Primers ein Maleinsäureanhydrid enthaltendes Polyolefin-Polymer, insbesondere ein Maleinsäureanhydrid gepfropftes Polyolefin-Polymer, bevorzugt ein Maleinsäureanhydrid gepfropftes Polyethylen- oder Polypropylen-Polymer ist.

6. Verfahren zum Verschweißen nach einem der Ansprüche 1 bis 5, **dadurch gekennzeichnet, dass** das mindestens eine Maleinsäureanhydrid enthaltende Polymer ein gewichtsmittleres Molekulargewicht Mw im Bereich von 5000 - 2000000 g/mol, insbesondere von 50000 - 1000000 g/mol, bevorzugt von 100000 - 500000 g/mol aufweist.

7. Verfahren zum Verschweißen nach einem der Ansprüche 1 bis 6, **dadurch gekennzeichnet, dass** der Primer als mindestens einen Polyester mindestens einen Copolyester enthält, wobei der Polyester vorzugsweise als Säurekomponente mindestens eine Säure ausgewählt aus Terephthalsäure und Isophthalsäure und/oder als Alkoholkomponete mindestens einen Alkohol ausgewählt aus der Gruppe bestehend aus 3-Hydroxy-2,2-Dimethylpropyl-3-Hydroxy-2,2-Dimethylpropanoat (HPHP), Ethylenglykol, Diethylenglykol, Neopentylglykol, Cyclohexandimethanol, 1,3-Propandiol, 1,4-Butandiol und 2-Methyl-1,3-Propandiol enthält.

8. Verfahren zum Verschweißen nach einem der Ansprüche 1 bis 7, **dadurch gekennzeichnet, dass** der mindestens eine Polyester ein gewichtsmittleres Molekulargewicht zwischen 1500 bis 100000 g/mol, insbesondere zwischen 5000 bis 75000 g/mol, bevorzugt zwischen 15000 bis 50000 g/mol aufweist.

9. Verfahren zum Verschweißen nach einem der Ansprüche 1 bis 8, **dadurch gekennzeichnet, dass** der mindestens eine Polyester Hydroxylgruppen-terminiert ist.

10. Gegenstand hergestellt nach einem Verfahren zum Verschweißen gemäß einem der Ansprüche 1-9.

**Claims**

1. A method for welding a polyolefin plastics material to a second plastics material using a primer, wherein the primer contains at least one polymer that contains maleic acid anhydride, and at least one polyester.

2. The welding method according to claim 1, **characterized in that** the polyolefin plastics material is selected from the groups of polyethylene plastics material, in particular HD polyethylene, MD polyethylene, LD polyethylene, UHMW polyethylene or LLD polyethylene plastics material, and polypropylene plastics material, and is preferably a polypropylene plastics material.

**3.** The welding method according to claim 1 or 2, **characterized in that** the polyolefin plastics material contains a polyolefin polymer, in particular a polyethylene and/or polypropylene, in an amount of greater than 90 wt.%, in each case based on the total polyolefin plastics material, and/or the polyolefin plastics material has molar masses as a weight average Mw of greater than 10,000 g/mol.

**4.** The welding method according to one of claims 1 to 3, **characterized in that** the second plastics material is selected from plastics materials made of polycarbonate (PC), acrylonitrile butadiene styrene (ABS), polymethyl methacrylate (PMMA), polyethylene terephthalate (PET), polybutylene terephthalate (PBT), polystyrene (PS), polystyrene acrylonitrile (SAN), polyacrylic ester styrene acrylonitrile (ASA), methyl methacrylate acrylonitrile butadiene styrene (MABS), high impact polystyrene (HIPS), polyamide (PA) or mixtures thereof.

**5.** The welding method according to one of claims 1 to 4, **characterized in that** the at least one primer polymer that contains maleic acid anhydride is a polyolefin polymer that contains maleic acid anhydride, in particular a maleic acid anhydride-grafted polyolefin polymer, preferably a maleic acid anhydride-grafted polyethylene or polypropylene polymer.

**6.** The welding method according to one of claims 1 to 5, **characterized in that** the at least one polymer that contains maleic acid anhydride has a weight-average molecular weight Mw in the range of from 5,000-2,000,000 g/mol, in particular from 50,000-1,000,000 g/mol, preferably from 100,000-500,000 g/mol.

**7.** The welding method according to one of claims 1 to 6, **characterized in that** the primer contains at least one copolyester as the at least one polyester, the polyester preferably containing at least one acid selected from terephthalic acid and isophthalic acid as an acid component, and/or at least one alcohol selected from the group consisting of 3-hydroxy-2,2-dimethylpropyl-3-hydroxy-2,2-dimethylpropanoate (HPHP), ethylene glycol, diethylene glycol, neopentyl glycol, cyclohexanedimethanol, 1,3-propanediol, 1,4-butanediol and 2-methyl-1,3-propanediol as an alcohol component.

**8.** The welding method according to one of claims 1 to 7, **characterized in that** the at least one polyester has a weight-average molecular weight between 1,500 and 100,000 g/mol, in particular between 5,000 and 75,000 g/mol, preferably between 15,000 and 50,000 g/mol.

**9.** The welding method according to one of claims 1 to 8, **characterized in that** the at least one polyester is hyrdroxyl-group-terminated.

**10.** An object produced by a welding method according to one of claims 1-9.


**Revendications**

**1.** Procédé de soudage d'un plastique à base de polyoléfine avec un second plastique à l'aide d'une amorce, l'amorce contenant au moins un polymère qui contient de l'anhydride d'acide maléique et au moins un polyester.

**2.** Procédé de soudage selon la revendication 1, **caractérisé en ce que** le plastique à base de polyoléfine est choisi dans le groupe constitué par le plastique à base de polyéthylène, en particulier le plastique à base de polyéthylène HD, le plastique à base de polyéthylène MD, le plastique à base de polyéthylène LD, le plastique à base de polyéthylène UHMW ou le plastique à base de polyéthylène LLD, et le plastique à base de polypropylène, et de préférence un plastique à base de polypropylène.

**3.** Procédé de soudage selon la revendication 1 ou 2, **caractérisé en ce que** le plastique à base de polyoléfine contient plus de 90 % en poids de polymère à base de polyoléfine, en particulier un polyéthylène et/ou un polypropylène, dans chaque cas par rapport à l'ensemble du plastique à base de polyoléfine et/ou le plastique à base de polyoléfine présente des masses molaires supérieures à 10 000 g/mol comme moyenne en poids (Mw).

**4.** Procédé de soudage selon l'une des revendications 1 à 3, **caractérisé en ce que** le second plastique est choisi parmi des plastiques en polycarbonate (PC), en acrylonitrile butadiène styrène (ABS), en méthacrylate de polyméthyle (PMMA), en polyéthylène téréphtalate (PET), en polybutylène téréphtalate (PBT), en polystyrène (PS), en polystyrène-acrylonitrile (SAN), en polyacrylester styrène-acrylonitrile (ASA), en méthacrylate de méthyle-acrylonitrile-butadiène-styrène (MABS), en polystyrène à résistance élevée aux chocs (HIPS), en polyamide (PA) ou des mélanges de ceux-ci.

5. Procédé de soudage selon l'une des revendications 1 à 4, **caractérisé en ce que** l'au moins un polymère de l'amorce contenant de l'anhydride d'acide maléique est un polymère à base de polyoléfine contenant de l'anhydride d'acide maléique, en particulier un polymère à base de polyoléfine greffé avec de l'anhydride d'acide maléique, de préférence un polymère polyéthylène ou polypropylène greffé avec de l'anhydride d'acide maléique.

6. Procédé de soudage selon l'une des revendications 1 à 5, **caractérisé en ce que** l'au moins un polymère contenant de l'anhydride d'acide maléique présente un poids moléculaire moyen en poids (Mw) compris entre 5 000 et 2 000 000 g/mol, en particulier entre 50 000 et 1 000 000 g/mol, de préférence entre 100 000 et 500 000 g/mol.

7. Procédé de soudage selon l'une des revendications 1 à 6, **caractérisé en ce que** l'amorce contient au moins un copolyester en tant qu'au moins un polyester, le polyester contenant de préférence au moins un acide choisi parmi l'acide téréphtalique et l'acide isophtalique en tant que composant acide et/ou, en tant que composant alcool, au moins un alcool choisi dans le groupe constitué par le 3-hydroxy-2,2-diméthylpropyl-3-hydroxy-2,2-diméthylpropanoate (HPHP), l'éthylèneglycol, le diéthylèneglycol, le néopentylglycol, le cyclohexane-diméthanol, le 1,3-propanediol, le 1,4-butanediol et le 2-méthyl-1,3-propanediol.

8. Procédé de soudage selon l'une des revendications 1 à 7, **caractérisé en ce que** l'au moins un polyester présente un poids moléculaire moyen en poids compris entre 1 500 et 100 000 g/mol, en particulier entre 5 000 et 75 000 g/mol, de préférence entre 15 000 et 50 000 g/mol.

9. Procédé de soudage selon l'une des revendications 1 à 8, **caractérisé en ce que** l'au moins un polyester se termine par un groupe hydroxyle.

10. Objet fabriqué selon un procédé de soudage conforme à l'une des revendications 1 à 9.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005261422 A1
- DE 102005056286 A1

**In der Beschreibung aufgeführte Nicht-Patentliteratur**

- **CHARLES M. HANSEN.** Hansen Solubility Parameters: A User's Handbook. Taylor & Francis Group, 2007